(19) Europäisches Patentamt
European Patent Office
Office européen des brevets

(11) **EP 2 569 535 B1**

(12) **EUROPÄISCHE PATENTSCHRIFT**

(45) Veröffentlichungstag und Bekanntmachung des Hinweises auf die Patenterteilung:
**05.10.2016  Patentblatt 2016/40**

(21) Anmeldenummer: **11718116.4**

(22) Anmeldetag: **10.05.2011**

(51) Int Cl.:
*F03D 1/06* *(2006.01)*    *F03D 3/06* *(2006.01)*

(86) Internationale Anmeldenummer:
**PCT/EP2011/057466**

(87) Internationale Veröffentlichungsnummer:
**WO 2011/141444 (17.11.2011 Gazette 2011/46)**

(54) **ERFINDUNG BETREFFEND ROTORBLÄTTER, INSBESONDERE FÜR WINDKRAFTANLAGEN**

INVENTION RELATING TO ROTOR BLADES IN PARTICULAR FOR WIND POWER INSTALLATIONS

PALES DE ROTOR, EN PARTICULIER POUR ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2010  EP 10162448**

(43) Veröffentlichungstag der Anmeldung:
**20.03.2013  Patentblatt 2013/12**

(73) Patentinhaber: **Technische Universität Darmstadt 64285 Darmstadt (DE)**

(72) Erfinder:
• **LAMBIE, Benjamin 63150 Heusenstamm (DE)**
• **HUFNAGEL, Klaus 63457 Hanau (DE)**

(74) Vertreter: **Stumpf, Peter TransMIT Gesellschaft für Technologietransfer mbH Kerkrader Straße 3 D-35394 Gießen (DE)**

(56) Entgegenhaltungen:
**FR-A1- 2 456 211      US-A- 2 622 686
US-A- 2 716 460      US-A- 4 383 801
US-A1- 2008 175 709**

EP 2 569 535 B1

## Beschreibung

Die vorliegende Erfindung befasst sich mit Rotorblättern, insbesondere für den Einsatz bei Windkraftanlagen (WKA) und insbesondere der allgemeinen Untersuchung der Fluid-Struktur Interaktion eines Konzepts zur passiven Böenlastminderung an Windkraftanlagen. Rotorblätter an Windkraftanlagen erfahren Wechsellasten, die auf Fluktuationen im Anstellwinkel und der Anströmung zurückzuführen sind. Diese verursachen einen sich ständig ändernden Auftrieb. Mit dem hier untersuchten Konzept sollen diese Änderungen reduziert werden.

## Stand der Technik

Die Wechselwirkung von Strömungen mit einer elastischen Struktur hat eine Deformation der Struktur zur Folge, die wiederum die Strömungskräfte verändert. Dieses Verhalten wird allgemein als Fluid-Struktur Interaktion (kurz: FSI) bezeichnet. Speziell im Bereich der Aeroelastik, also der Interaktion von Luftströmungen mit elastischen Profilen, ist die Beschreibung dieser Wechselwirkung zur Bestimmung der statischen und dynamischen Stabilität der Struktur von großer praktischer Relevanz. Durch die Deformation der Struktur werden Luftkräfte induziert, die je nach Phasenlage zur Systembewegung Energie in die Struktur einleiten.

Mit steigender Geschwindigkeit wird ein kritischer Punkt erreicht, an dem der Energieeintrag die dissipierte Energie durch die Strukturdämpfung übersteigt und zu angefachten Schwingungen führt. Dieses Phänomen ist als Flattern bekannt. Während die Aeroelastik als wissenschaftliche Disziplin seit ihrem Beginn in den 1920er Jahren dadurch bestimmt ist Modelle und Theorien zur Verfügung zu stellen, die eine genaue Vorhersage der Flattergrenze ermöglichen, wird in den letzten 30 Jahren zunehmend der Versuch gemacht, diese Wechselwirkung positiv zur Strömungskontrolle zu nutzen. Für einen gewinnbringenden Einsatz der Fluid-Struktur Interaktion bedeutet dies, das mittlere zeitliche Strömungsverhalten zu ermitteln und die Struktursteifigkeiten dahingegen zu optimieren, dass im Mittel eine Zielfunktion unter Beibehaltung der Stabilität besser erreicht wird.

Windkraftanlagen unterliegen ständig wechselnden Lasten. Diese Lastwechsel resultieren aus dem Durchlaufen der atmosphärischen Grenzschicht, Fluktuation der Windgeschwindigkeit aufgrund von Turbulenz und Böen, dem Turmvorstau oder Schwingungen des Rotorblattes.

Diese Effekte bewirken eine Änderung des Anstellwinkels unter dem das Profil angeströmt wird und damit einhergehend eine Druckänderung entlang des Profils. Unter diesen Betriebsbedingungen werden die Komponenten einer Windkraftanlage derart beansprucht, dass die Lebensdauer von 20 Jahren von Teilen der Anlage nicht erreicht wird. Im Hinblick auf die Entwicklung von Maßnahmen mit denen solche Lastschwankungen kontrolliert werden können, muss darauf geachtet werden, dass diese Komponenten selbst die geforderte Zuverlässigkeit erreichen und die Systemkomplexität überschaubar bleibt.

Dokument US 2,622,686 offenbart ein Windturbinenblatt, wobei die Wölbung des Blattes passiv angepasst wird, um Druckschwankungen zu reduzieren.

## Aufgabe

Aufgabe der Erfindung ist es daher ein Profil von Rotorblättern, insbesondere für den Einsatz bei WKA vorzusehen, welches die Nachteile im Stand der Technik vermeidet.

## Lösung der Aufgabe

In diesem Zusammenhang verfolgt die vorliegende Erfindung den Ansatz Druckschwankungen auf einem Profil, die aus einer Änderung des Anstellwinkels resultieren, durch eine passive Anpassung der Profilwölbung zu dämpfen. Das Ziel ist es den Auftrieb, d.h. die Lasten auf dem Profil, konstant zu halten.

Die dem Konzept innewohnende Erfindung besteht aus einem Klappenprofil (als Profilierung der Rotorblätter), das diese Reduzierung durch eine Wölbungsänderung erreicht. Die Wölbungsänderung wird dabei durch die Strömung selbst eingeleitet.

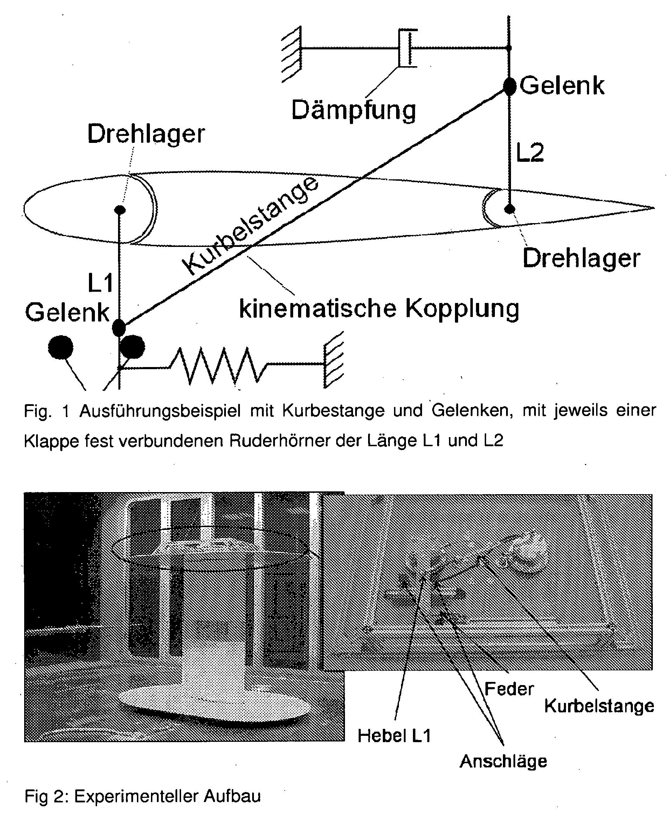

Die Änderung der Wölbung wird dabei durch ein elastisch und / oder drehbar gelagertes Klappensystem bestehend aus Vorderkanten- und Hinterkantenklappe ermöglicht. Dabei sind beide Klappen kinematisch miteinander gekoppelt. Die Kinematik zur starren Kopplung kann unterschiedlich ausgeführt werden. In einfachsten Fall besteht sie aus einem Kurbeltrieb, es sind aber Getriebe jeglicher Art denkbar welche die gleiche Kinematik erzeugen. Der Kurbeltrieb ist schematisch in der Abbildung Fig. 1 dargestellt. Die fest mit jeweils einer Klappe fest verbundenen Ruderhörner der Länge L1 und L2 werden mit der Kurbelstange L verbunden. Kernprinzip der Anordnung ist, dass jeweils ein Ruderhorn nach oben (unten) und das andere nach unten (oben) angebracht wird, damit eine Klappe im Uhrzeigersinn und die andere Klappe sich gleichzeitig im Gegenuhrzeigersinn drehen.

Sowohl in der theoretischen Berechnung als auch im Praxisbetrieb haben sich Getriebeübersetzungen (L1/L2) von 2 bis 3 als optimal und ausreichend ergeben. Die Wahl des Übersetzungsverhältnisses steht in Verbindung mit der Wahl der Federsteifigkeit. Das Übersetzungsverhältnis bestimmt das Maß für die Zu- bzw. Abnahme des Auftriebs mit steigendem bzw. sinkendem Anstellwinkel (Steigung der Funktion, die Auftriebsbeiwert über Anstellwinkel beschreibt).

Im Fall einer Anstellwinkeländerung der Strömung führt dies hauptsächlich zu einer Änderung der Druckkraft im Nasenbereich der Vorderkante des Profils.

Die aus der Druckänderung resultierende Kraft steuert die Auslenkung der Vorderkantenklappe und gleichzeitig die Hinterkantenklappe. Somit wird eine Zu- bzw. Entwölbung ermöglicht.

Die aus der Druckänderung resultierende Kraft erzeugt ein Moment um den Drehpunkt der elastischen Vorderkante oder der Vorderkantenklappe. Dieses Moment wiederum führt zu einer Drehbewegung der elastischen Vorderkante oder der Vorderkantenklappe, welches durch den Kurbeltrieb simultan die Hinterkantenklappe verdreht. Die Auslenkungen der elastischen Hinterkante oder der Hinterkantenklappe sind um das Verhältnis L1/L2 größer als die der elastischen Vorderkante oder der Vorderkantenklappe. Somit wird durch die Wirkung der Luftkräfte auf die elastische Vorderkante oder die Vorderkantenklappe eine Zu- bzw. Entwölbung des aerodynamischen Profils (Flügelschnitt) erreicht.

Bekannterweise ist durch die Umströmung des Profils entstehende Druckdifferenz zwischen Ober- und Unterseite im vorderen Profilbereich sehr viel größer als im hinteren Bereich. Die Druckdifferenz ist bei konstantem Anstellwinkel von der Profilform abhängig. Diese Tatsache bestimmt die Längen der elastischen Kanten oder der Klappen. Es hat sich erwiesen, dass die Länge der Vorderkantenklappe 15% bis 20% der Profiltiefe betragen sollte, die Länge der Hinterkantenklappe sollte 20% bis 30% der Profiltiefe betragen.

Es ist zu beachten, dass die Druckdifferenz zwischen Ober-und Unterseite des Profils auch eine Kraft bzw. Moment auf der elastischen Hinterkante oder der Hinterkantenklappe erzeugt. Durch die starre Kopplung zwischen den beiden Klappen und der Tatsache dass ein Übersetzungsverhältnis L1/L2 eingestellt werden kann, werden die Momente der Hinterkantenklappe um das Verhältnis L1/L2 vergrößert um den Drehpunkt der Vorderkantenklappe übertragen. Das heißt unter bestimmten Druckverteilungen kann es dazu kommen die Klappenmechanik durch die Hinterkantenklappe gesteuert wird. Dieser Umstand ist hinsichtlich der Stabilität des Systems von Vorteil und in der Auslegung zu berücksichtigen.

Die Ergebnisse zeigen, dass für harmonische, regelmäßige Änderungen des Anstellwinkels die Amplituden vollständig ! reduziert werden.

Windkraftanlagen erfahren aufgrund ihrer Betriebsbedingungen ständig wechselnde Lasten. Insbesondere resultieren aus den fluktuierenden aerodynamischen Lasten wechselnde Biegespannungen an der Wurzel der Rotorblätter. Diese Wechselspannungen verringern die Dauerfestigkeit der Flügel. Am Rotorblatt entstehen aufgrund der höheren Umfangsgeschwindigkeiten die größten Kräfte im Außenbereich des Flügels. Diese Kräfte sind weiterhin vom Auftriebsbeiwert $cL$ der einzelnen Profilsegmente abhängig. Die Lasten am Rotorblatt können somit über eine Änderung des Auftriebsbeiwertes kontrolliert werden. Der Auftriebsbeiwert ist unter anderem abhängig von der Profilwölbung.

Im Betrieb kann die Wölbung durch die Verwendung von Klappen verändert werden und führt zu einer Parallelverschiebung der $cL$-$\alpha$_-Kurve, wie es in Bild 2.6 gezeigt ist.

Bild 2.6.: Parallelverschiebung der $cL$-Kurve infolge einer Wölbungsänderung am

Profil

An Windkraftanlagen ergibt sich der Anströmwinkel $\alpha$ aus der vektoriellen Summe von Umfangsgeschwindigkeit und Windgeschwindigkeit mit dem Profil. Daraus folgt, dass fluktuierende Windgeschwindigkeiten eine Änderung des Anstellwinkels bewirken.

Die Erfindung macht sich in dem der Erfindung zu Grunde liegenden Konzept diese Anstellwinkeländerung für eine passive Wölbungsänderung zu Nutze. Eine Erhöhung des Anstellwinkels ergibt eine höhere Saugspitze im Nasenbereich des Profils. Diese Druckerhöhung lenkt eine an dem Profil installierte Vorderkantenklappe, wie es in Bild 2.7 gezeigt wird, aus.

Bild 2.7.: Konzept des Klappenprofils zur Lastminderung; hier: Entwölbung

Eine, an der Kurbel der elastischen Vorderkante oder der Vorderkantenklappe, angebrachte Feder ermöglicht die Einstellung des Arbeitsbereiches des Systems, indem die Vorspannkraft der Feder den auf die Vorderkante wirkenden Strömungskräften überlagert wird. Das Verhältnis der Vorspannkraft zum Drehwinkel kann über die Wahl der Federsteifigkeit definiert werden.

Die Wahl der Federsteifigkeit steht im Zusammenhang mit der Wahl des Übersetzungsverhältnisse. Die Federsteifigkeit bestimmt das Maß für die Zu- bzw. Abnahme des Auftriebs mit steigendem bzw. sinkendem Anstellwinkel (Steigung der Funktion, die Auftriebsbeiwert über Anstellwinkel beschreibt).

Die Vorspannkraft bzw. das Vorspannmoment ist abhängig vom gewählten Auslegungspunkt. Je höher das Vorspannmoment desto höher ist der Auftrieb im Auslegungspunkt.

Da es sich um ein schwingungsfähiges System handelt wird an Kurbel der Hinterkante ein Dämpfer angebracht der das System stabilisiert.

Mit mechanischen Anschlägen an den elastischen Kanten oder die Klappen kann die Drehbewegung auf bestimmte Winkel begrenzt werden, wodurch der Arbeitsbereich des Systems ebenfalls begrenzt werden kann. Mit Arbeitsbereich ist gemeint in welchem Bereich sich das Profil elastisch verhält bzw. Ent- bzw. Zuwölbt. Schlagen die elastischen Kanten oder die Klappen in den Anschlägen an, verhält sich das Profil wie ein starres Profil. D.h. der Auftrieb steigt bzw. sinkt bei einer weiteren Erhöhung bzw- Verringerung des Anstellwinkels entsprechend sich der dann eingestellten Profilkontur.

Durch eine kinematische Kopplung dieser Auslenkung mit der Hinterkantenklappe kommt es zu einer Entwölbung des Profils. Die entstehenden Überlasten werden somit gedämpft und verringern die Spannungsamplituden. Eine an der Vorderkantenklappe angebrachte Feder liefert die Rückstellkraft (s. Bild 2.7b und Fig. 1). Bei entsprechender Vorspannung der Feder ist weiterhin eine Zuwölbung des Profils möglich. Dadurch können auch fluktuierende Lasten um einen Auslegungspunkt konstant gehalten werden. Da es sich um ein schwingungsfähiges System handelt, wird an der Hinterkante ein Dämpfer angebracht.

Bild 2.7b.: Konzept des Klappenprofils mit Rückstellfeder, Dämpfung und Anschlag.

Dabei kann die kinematische Kopplung in jeder, dem Fachmann bekannten Form erfolgen, mögliche Arten der kinematischen Kopplung sind jede mögliche Art von Getrieben wie etwa durch Gelenke, Stirnradgetriebe, Kegelradgetriebe, Planetengetriebe, Schneckengetriebe, Reibradgetriebe, Schraubgetriebe, Keilgetriebe, Kettentriebe, Zahnriemengetriebe, Flachriemengetriebe, Keilriemengetriebe, Kurbeltriebe, Kniehebelgetriebe, Hebelgetriebe.

Als Feder sind folgende Elemente prinzipiell geeignet: Drehfeder, Zugfeder, Druckfeder, Tellerfeder, Druckluftaktuatoren. Insbesondere die Verwendung von Federelementen mit nicht-linearer Federkennlinie kommt in Frage.

Als Dämpfer sind folgende bekannten Dämpfer geeignet: Öldämpfer, Luftdämpfer, viskose Dämpfer.

Das Strukturverhalten wird über eine Bewegungsgleichung beschrieben. Die Bewegungsgleichung kann mit dem in Bild 2.8 gezeigten Ersatzmodell hergeleitet werden.

Bild 2.8.: Klappenmodell mit einem Freiheitsgrad

Die Ordinate des rechtwinkligen Koordinatensystems liegt auf der Profilsehne, der Ursprung befindet sich bei halber Profiltiefe (c/2). Der Drehwinkel g beschreibt die Auslenkung der Vorderkantenklappe, der Drehwinkel b die Auslenkung der Hinterkantenklappe. Entsprechend werden die Trägheitsmomente $\theta_l$ (l=leading) und $\theta_t$ (t= trailing) bezeichnet und sind um die Klappendrehpunkte definiert. Die Rückstellkraft an der Vorderkantenklappe ergibt sich aus der Drehsteifigkeit $k_\gamma$ und der Auslenkung $\gamma$. Die Dämpfung $d_\beta$ wird an der Hinterkantenklappe über die Winkelgeschwindigkeit ß-Punkt berücksichtigt. Die Kopplung der beiden Klappen erfolgt über das Übersetzungsverhältnis

$$i = \frac{\beta}{\gamma} = \frac{\dot{\beta}}{\dot{\gamma}}. \qquad (2.68)$$

Damit ist der Freiheitsgrad $\beta$ eine Funktion von $\gamma$. Die lineare Bewegungsgleichung lautet damit

$$\theta_K \ddot{\gamma} + d_\beta i \dot{\gamma} + k_\gamma \gamma = M_\gamma(t) + M_\beta(t). \qquad (2.69)$$

wobei $\theta_K$ das Gesamtträgheitsmoment der beiden Klappen ist:

$$\theta_K = \theta_l + \theta_t i^2. \qquad (2.70)$$

Die aerodynamischen Momente $M_\gamma(t)$ und $M\beta(t)$ werden aus den Momentenbeiwerten bestimmt:

$$M_\gamma(t) + M_\beta(t) = \left(c_{M_{LE}} + c_{M_{TE}}\right) \frac{1}{2} \rho V_\infty^2 c^2 b. \qquad (2.71)$$

In einer -nicht dargestellten- Ausführungsform, ist anstelle der Verwendung von Klappen auch die Verwendung von einer integrierten, nachgiebigen Struktur vorgesehen. Als Material kommen dafür Gummi, Latex, Faser-Kunststoff Verbunde und/oder intelligente Materialen in Frage z.B. SMA oder Piezomaterialien. Die Kopplung erfolgt dann durch einen integrierten Kraftfluss durch die Struktur von vorne nach hinten. Zu Stabilisierung sind dann weiterhin Dämpfungselemente wie oben beschrieben zu verwenden.

Alternativ -nicht dargestellt- ist der Einsatz von aktiven Dämpfern und Steifigkeitselementen möglich.

Alternativ -nicht dargestellt- kann die Kopplung auch aktiv verstellt werden unter Verwendung der Prinzipien/Getriebearten wie sie oben aufgeführt sind.

In weiteren Ausführungsarten -nicht dargestellt- befinden sind -in Abwandlungen zu Bild 2.7b und Fig. 1 - die Angriffspunkte für die Elemente Kopplung, Dämpfung und Anschlag an jeweils unterschiedlichen Bereichen der Klappen, welche auch außerhalb der Achsbereiche für die Lagerung der auslenkbaren Klappen liegen können.

**[Bezugszeichenliste]**

**Latelnische Buchstaben**

| | | |
|---|---|---|
| A | [-] | Einflusskoeffizienten der Quellenverteilung |
| B | [-] | Einflusskaeffizienten der Wirbelverteilung |
| b | [m] | Spannweite |
| C | [-] | Einflusskoeffizienten der diskreten Wirbel im Nachlauf |
| c | [m] | Profiltiefe |
| $c_L$ | [-] | Auftriebsbeiwert |
| $c_M$ | [-] | Momentenbeiweit |
| $c_p$ | [-] | Druckbeiwert |
| D | [-] | Einflusskoeffizient des abgelösten Wirbel |
| $i$ | [-] | Übe rsetzu ngsve rhältnis |
| $k$ | [-] $\left[\frac{\mathrm{Nm}}{\mathrm{rad}}\right]$ | reduzierte Frequenz |
| $k_\gamma$ | | Federkonstante |
| $l$ | [-] | Panellänge |
| $M_\gamma$ | [Nm] | Moment an der Vorderkante |
| $M_\beta$ | [Nm] | Moment an der Hinterkante |
| $n$ | [-] | Panelzahl |
| $V$ | $\left[\frac{\mathrm{m}}{\mathrm{s}}\right]$ | Geschwindigkeit |
| $V_\infty$ | $\left[\frac{\mathrm{m}}{\mathrm{s}}\right]$ | Geschwindigkeit der freien Abströmung |
| $V_{Stream}$ | $\left[\frac{\mathrm{m}}{\mathrm{s}}\right]$ | Geschwindigkeit relativ zu Profil |
| r | [-] | Abstand |
| $T$ | [J] | kinetische Energie |
| $t$ | [s] | Zeit |
| $U$ | [J] | potentielle Energie |
| $u$ | $\left[\frac{\mathrm{m}}{\mathrm{s}}\right]$ | Geschwindigkeitskomponente in $x$-richtung |

(fortgesetzt)

**Latelnische Buchstaben**

| | | |
|---|---|---|
| $W$ | $\left[\frac{m}{s}\right]$ | Geschwindigkeitskomponente in $z$-Richtung |

**Grlechlsche Buchstaben**

| | | |
|---|---|---|
| $\alpha$ | [°] | Anstellwinkel |
| $\beta$ | [°] | Klappenwinkel Hinterkante |
| $\Gamma$ | $\left[\frac{m^2}{s}\right]$ | Zirkulation |
| $\gamma$ | [°] | Klappenwinkel Vorderkante |
| p | $\left[\frac{kg}{m^3}\right]$ | Dichte von Luft (= 1,204) |
| $\Phi$ | $\left[\frac{m^2}{s}\right]$ | Geschwindigkeitspotential |
| $\Psi$ | [°] | Rotorwinkel |
| $\nabla$ | [-] | Nabla-Operator |
| $\sigma$ | $\left[\frac{m}{s}\right]$ | Quelle |
| $\tau$ | $\left[\frac{m}{s}\right]$ | Wirbelstärke |
| $\theta_i$ | [rad] | Panelwinkel |
| $\theta_l$ | [kgm$^2$] | Trägheitsmoment der Vorderkante |
| $\theta_t$ | [kgm$^2$] | Trägheitsmoment der Hinterkante |
| $\omega$ | $\left[\frac{1}{rad}\right]$ | Winkelgeschwindigkeit |

**Indizes**

Subskripte

| | |
|---|---|
| **0** | Anfangswert |
| $i$ | Panel |
| $j$ | Quelle/Wirbel |
| $k$ | Zeitschritt |
| le | Vorderkante |
| kl | Klappenkoordinaten |
| mi | Kontrollpunkt |
| m | Wirbel im Nachlauf |
| p | Panelkoordinaten |
| s | Abgelöster Wirbel an der Hinterkante |
| St | Staupunkt |
| st | stationär |
| te | Hinterkante |
| w | Wirbel |

Superskripte

| | |
|---|---|
| n | Normalenrichtung |
| t | Tangentenrichtung |
| x | $x$-Richtung |
| z | $z$-Richtung |

In einer weiteren -nicht dargestellten- Ausführungsform, ist vorgesehen, dass die Einstellung der Dämpfung und/oder, die Stärke der kinematischen Kopplung und/oder auch die Einstellung der Steifigkeit in der vorliegenden Erfindung auch durch entsprechende Verfahren, in Abhängigkeit von den Wind- oder (im Falle der Anwendung ausserhalb einer WKA) in Abhängigkeit von den BetriebsVerhältnissen in festen oder variablen Zeitintervallen für feste oder variable Zeitintervalle veränderlich gesteuert oder geregelt änderbar ausgeführt sind.

Auch in diesem Falle bleibt das Betriebsverfahren des Rotorprofils passiv gekoppelt. Lediglich die Art der Kopplung oder der Dämpfung oder der Steifigkeit ist variable ausgeführt. Nach Einstellung der jeweils neuen Parameter erfolgt die Kopplung zwischen Vorderkante und Hinterkante des Profils wieder passiv.

**Verfahren**

Das dazu eingesetzte Verfahren, wird im Folgenden dargestellt.

**Strömungsmodell (dazu):**

Dabei findet das Panelverfahren nach Hess und Smith (1966) Anwendung. Durch die zeitabhängige Diskretisierung des Nachlaufs können weiterhin instationäre Wirbelablösungen berücksichtigt werden. Die Struktur wird mit Hilfe eines diskreten Ersatzmodells abgebildet und über eine lineare Bewegungsgleichung beschrieben.

Panelverfahren basieren auf der Laplace-Gleichung. Diese wird im Folgenden mit Hilfe des Massenerhaltungssatzes und unter Berücksichtigung der Potentialtheorie hergeleitet. Somit wird die Strömung als inkompressibel und reibungsfrei betrachtet.

In einem begrenzten Volumenelement innerhalb des Strömungsgebiets muss die Masse zeitlich konstant bleiben. Die Erhaltung der Masse wird über die Kontinuitätsgleichung beschrieben:

$$\frac{\delta \rho}{\delta t} + \nabla \cdot (\rho V) = 0 \qquad (2.1)$$

wobei $\rho$ die Dichte ist und V die Geschwindigkeit. Betrachtet man ein inkompressibles Fluid, $\rho$ = *const.*, dann reduziert sich 2.1 zu

$$\nabla \cdot V = 0. \qquad (2.2)$$

In einem Strömungsgebiet kann jedem Punkt ein Geschwindigkeitsvektor zugeordnet werden. Mathematisch gesehen handelt es sich dabei um ein Vektorfeld. Besitzt dieses vektorielle Strömungsfeld ein Potential, spricht man von Potentialströmung. Gemäß der Definition des Potentials ist das Strömungsfeld in jedem Punkt wirbelfrei, d.h. die Rotation verschwindet:

$$\nabla \times V = 0. \qquad (2.3)$$

Der Gradient des Potentials ergibt das Geschwindigkeitsfeld

$$\nabla \Phi = V. \qquad (2.4)$$

Für die Beschreibung einer inkompressiblen Potentialströmung folgt aus Gleichung 2.2 und 2.4 die Laplace-Gleichung

$$\nabla^2 \Phi = 0. \qquad (2.5)$$

Diese Gleichung ist eine lineare Differentialgleichung. Das bedeutet ihre Lösung kann aus der Superposition mehrerer Einzellösungen aufgebaut werden. In der Strömungsmechanik erfolgt das aus der Überlagerung von Elementarströmungen. Zu den Elementarströmungen gehören die Parallelströmung, die Quellen und Senken, der Dipol sowie der Potentialwirbel, die in der einschlägigen Literatur wie Durst (2006) beschrieben sind.

In der vorliegenden Arbeit wird die Profilumströmung aus einer Überlagerung von Quellen und Wirbeln mit der freien Anströmung ermittelt. Dabei wird zunächst die Profiloberfläche in diskrete Abschnitte eingeteilt, so genannte Panels. Auf diese werden die Quellen und Wirbel so verteilt, dass sie die kinematische Randbedingung als auch die Kutta'sche Abflussbedingung erfüllen. Das in dieser Arbeit verwendete Panelverfahren besitzt die Eigenheit, dass der Betrag der Quellen und Wirbeln über einem Panel konstant sind, wie es in Bild 2.1 gezeigt wird. Nach Katz und Plotkin (2001) kann die vom Panel induzierte Geschwindigkeit wie folgt hergeleitet werden. Das Panel wird durch die Punkte $x_1$ und $x_2$ abgegrenzt und ist ge-

Bild 2.1.: Ebene Quelle: Verteilung und Panelkoordinaten

genüber der $x$-Achse um den Winkel $\theta$ geneigt Die Darstellung erfolgt in Panelkoordinaten, sodass das Panel parallel zur x-Achse liegt. Eine Quelle induziert nur Geschwindigkeiten in radialer Richtung, die von der Ergiebigkeit und dem Abstand zur Quelle abhängen. Für den Fall, dass der Betrag der Ergiebigkeit konstant ist, gilt: $\sigma(x) = \sigma = const$. Der Einfluss des Geschwindikeitspotentials $\Phi$ eines Quellenelements $dx_0$ auf einen beliebigen Punkt $P(x, z)$ ist gegeben durch

$$d\Phi(x,z) = \frac{\sigma}{2\pi} \cdot \ln \sqrt{(x-x_0)^2 + (z-z_0)^2} \cdot dx_0. \qquad (2.6)$$

Da es sich um ein Potential handelt, reicht es die Differentiale $\frac{\delta}{\delta x}$ und $\frac{\delta}{\delta z}$ zu betrachten. Integriert über das gesamte Panel von $x_1$ nach $x_2$ erhält man für die Geschwindigkeitskomponenten in x- und in $z$-Richtung

$$u_p(x,z) = \frac{\sigma}{2\pi} \int_{x_1}^{x_2} \frac{x-x_0}{(x-x_0)^2 + (z-z_0)^2} dx_0 \qquad (2.7)$$

$$w_p(x,z) = \frac{\sigma}{2\pi} \int_{x_1}^{x_2} \frac{z-z_0}{(x-x_0)^2 + (z-z_0)^2} dx_0 \qquad (2.8)$$

 wobei der Index p für Panelkoordinaten steht. Nach Katz und Plotkin (2001) ist die Lösung des Integrals aus 2.7 und 2.8 gegeben durch

$$u_p(x,z) = \frac{\sigma}{2\pi} \ln \frac{\sqrt{(x-x_1)^2 + (z-z_1)^2}}{\sqrt{(x-x_2)^2 + (z-z_2)^2}} \qquad (2.9)$$

$$w_p(x,z) = \frac{\sigma}{2\pi} \left[ \arctan \frac{z-z_2}{x-x_2} - \arctan \frac{z-z_1}{x-x_1} \right]. \qquad (2.10)$$

Da das Panel parallel zur $x$-Achse liegt, gilt $z_1 = z_2$.

Von besonderem Interesse ist der Fall, bei dem sich der betrachtete Punkt P in der Mitte des Panels befindet. Zunächst erhält man allgemein für die Punkte auf dem Panel mit $z = z_1 = z_2$

$$u_p(x, z_1) = \frac{\sigma}{2\pi} \ln \frac{x - x_1}{|x - x_2|} \qquad (2.11)$$

$$w_p(x, z_1) = \frac{\sigma}{2}. \qquad (2.12)$$

Weiter folgt für die Mitte des Panels mit der Koordinate $x_M = \frac{x_1 + x_2}{2}$ die Geschwindigkeit

$$u_p(x_M, z_1) = \frac{\sigma}{2\pi} \cdot \ln(1) = 0. \qquad (2.13)$$

Im Gegensatz zu Quellen, induzieren Wirbel nur Geschwindigkeiten in tangentialer Richtung. Eine zur obigen Darstellung analoge Herleitung ergibt die Geschwindigkeitskompo-nenten in $x$- und in $z$-Richtung, für eine über dem Panel konstante Wirbelverteilung mit der Wirbelstärke $\tau$

$$u_p = \frac{\tau}{2\pi} \cdot \left[ \arctan \frac{z - z_2}{x - x_2} - \arctan \frac{z - z_1}{x - x_1} \right] \qquad (2.14)$$

$$w_p = -\frac{\tau}{2\pi} \cdot \ln \frac{\sqrt{(x - x_1)^2 + (z - z_1)^2}}{\sqrt{(x - x_2)^2 + (z - z_2)^2}} \qquad (2.15)$$

und für einen Punkt in der Mitte des Panels mit $z = 0$ und $x = \frac{x_1 + x_2}{2}$ ergibt sich

$$u_p = \frac{\tau}{2} \qquad (2.16)$$

$$w_p = 0. \qquad (2.17)$$

Das in dieser Arbeit verwendete Panelverfahren geht auf Hess und Smith (1966) zurück und folgt der Darstellung von Cebeci etal. (2005). Die Profilgeometrie wird durch n Pa-nels diskretisiert, die jeweils durch zwei Knotenpunkte abgegrenzt sind, siehe Bild 2.2 Die Zerteilung der insgesamt n + 1 Knotenpunkte erfolgt durch eine Kosinus-Transformation, sodass an der Vorder- und Hinterkante eine höhere Auflösung erfolgt. Das gewährleistet bei gleichbleibender Panelzahl eine wesentlich genauere Approximation der Profilkontur. Bereiche mit kleinen Gradienten können mit größeren Panels diskretisiert werden, ohne einen Verlust in der Genauigkeit nach sich zu ziehen. Damit ist eine recheneffiziente Diskretisierung gewährleistet.

Bild 2.2.: Verteilung der Knoten- und Kontrollpunkte in Anleitung nach Cebeci et al. (2005)

Für die Kosinus-Transformation gilt

$$x = \frac{1}{2}(1 - \cos\beta) \qquad (2.18)$$

wobei $\beta$ gleichmäßig in n + 1 Schritten unterteilt ist. Die Koordinaten werden beginnend an der Hinterkante gezählt. Sie verlaufen an der Profilunterseite entlang bis zur Vorderkante und über die Oberseite zurück. Im Bezug auf die $x$-Achse hat jedes Panel eine (Steigung, die durch den Winkel $\theta_i$ festgelegt ist.

$$\theta_i = \arctan\left(\frac{z_{i+1} - z_i}{x_{i+1} - x_i}\right), \qquad i = 1, 2, \dots n \qquad (2.19)$$

Die Berechnung der Strömung erfolgt durch die Überlagerung von Quellen und Wirbeln mit der freien Anströmung. Die Geschwindigkeit an einem beliebigen Punkt $P(x,z)$ ist gegeben durch

$$\vec{V} = \vec{U}_\infty + \vec{v} \qquad (2.20)$$

wobei $\vec{U}_\infty$ die ungestörte Anströmung ist

$$\vec{U}_\infty = V_\infty \cdot (\cos\alpha \cdot \vec{e}_x + \sin\alpha \cdot \vec{e}_z) \qquad (2.21)$$

und $\vec{v}$ die von den Quellen und Wirbeln induzierte Geschwindigkeit. Um die Strömung eindeutig zu bestimmen sind zwei Randbedingungen zu erfüllen. Da das Profil nicht durchströmt werden kann, muss die kinematische Randbedingung

$$V_i^n = 0, \qquad i = 1, 2, \dots, n \qquad (2.22)$$

an jedem Panel erfüllt sein. Dadurch wird die Profiloberfläche zu einer Stromlinie. Die Bedingung wird an $n$ Kontrollpunkten, die jeweils mittig auf dem Panel liegen, erfüllt:

$$x_{mi} = \frac{1}{2}(x_i + x_{i+1}) \qquad (2.23)$$

$$z_{mi} = \frac{1}{2}(z_i + z_{i+1}) \qquad (2.24)$$

Hierzu muss der Einfluss der Quellen und Wirbelelemente jedes Panels bestimmt werden. Durch Summation ergeben sich dann für den *i*-ten Kontrollpunkt die Geschwindigkeitskomponenten in normaler und tangentialer Richtung zu

$$V_i^n = \sum_{j=1}^{n} A_{ij}^n \sigma_j + \sum_{j=1}^{n} B_{ij}^n \tau_j + V_\infty \sin(\alpha - \theta_i) \qquad (2.25)$$

$$V_i^t = \sum_{j=1}^{n} A_{ij}^t \sigma_j + \sum_{j=1}^{n} B_{ij}^t \tau_j + V_\infty \cos(\alpha - \theta_i) \qquad (2.26)$$

*j* ist der Index für die Panels. $A_{ij}^n, A_{ij}^t, B_{ij}^n$ und $B_{ij}^t$ sind die Matrizen der Einflusskoeffizienten. Die hochgestellten Indizes n und *t* stehen für die Normalen- und Tangentialrichtung. Zusammen mit $\sigma_j$ und $\tau_j$ ergeben die Koeffizientenmatrizen die Geschwindigkeiten, die von dem *j*-ten Panel am *i*-ten Kontrollpunkt induziert werden. $\sigma_j$ ist die Ergiebigkeit der konstanten Quellenverteilung auf dem *j*-ten Panel und $\tau_j$ die Wirbelstärke, wobei weiterhin gilt ($\tau_j = \tau = const.$). Mit Gleichung 2.9, 2.10, 2.14 und 2.15 folgt für die Matrizen

$$A_{ij}^n = \begin{cases} \dfrac{1}{2\pi}\left[\sin(\theta_i - \theta_j)\ln\dfrac{r_{i,j+1}}{t_{i,j}} + \cos(\theta_i - \theta_j)\beta_{i,j}\right] & i \neq j \\ \dfrac{1}{2} & i = j \end{cases} \qquad (2.27)$$

$$A_{ij}^t = \begin{cases} \dfrac{1}{2\pi}\left[\sin(\theta_i - \theta_j)\beta_{i,j} - \cos(\theta_i - \theta_j)\ln\dfrac{r_{i,j+1}}{t_{i,j}}\right] & i \neq j \\ 0 & i = j \end{cases} \qquad (2.28)$$

$$B_{ij}^n = -A_{ij}^t \qquad (2.29)$$

$$B_{ij}^t = A_{ij}^n \qquad (2.30)$$

$$(2.31)$$

mit dem Abstand r und dem Winkel $\beta$ gegeben durch

$$r_{i,j+1} = \sqrt{(x_{mi} - x_{j+1})^2 + (z_{mi} - z_{j+1})^2} \qquad (2.32)$$

$$r_{i,j} = \sqrt{(x_{mi} - x_j)^2 + (z_{mi} - z_j)^2} \qquad (2.33)$$

$$\beta_{i,j} = \arctan\left(\frac{z_{mi} - z_{j+1}}{x_{mi} - x_{j+1}}\right) - \arctan\left(\frac{z_{mi} - z_j}{x_{mi} - x_j}\right) \qquad (2.34)$$

Die zweite Randbedingung, die erfüllt werden muss, ist die *Kuttasche Abflussbedingung.* Sie gibt vor, dass die Geschwindigkeit an der Hinterkante einen endlichen Wert haben muss. Die Strömung an der Ober- und Unterseite der Hinterkante erreicht am ersten und letzten Panel betragsmäßig die gleiche Geschwindigkeit. Da die Normalgeschwindigkeiten null sind, reicht es die Bedingung mit den tangentialen Komponenten zu erfüllen

$$V_n^t = -V_1^t \qquad (2.35)$$

Mit diesen beiden Randbedingungen kann ein lineares Gleichungssystem der Form

$$A\vec{x} = \vec{b} \qquad (2.36)$$

aufgestellt werden. Hier enthält die Matrix A die Einflusskoeffizienten, der Vektor $\vec{x}$ enthält die gesuchten Quellen und Wirbeln und im Vektor b sind die Geschwindigkeiten der freien Anströmung notiert. A ist eine quadratische Matrix der Ordnung n + 1 und nimmt die Form

$$A = \begin{vmatrix} a_{11} & a_{12} & \cdots & a_{1n} & a_{1,n+1} \\ a_{21} & a_{22} & \cdots & a_{2n} & a_{2,n+1} \\ \vdots & \vdots & \ddots & \vdots & \vdots \\ a_{n1} & a_{n2} & \cdots & a_{nn} & a_{n,n+1} \\ a_{n+1,1} & a_{n+1,2} & \cdots & a_{n+1,n} & a_{n+1,n+1} \end{vmatrix} \qquad (2.37)$$

an. Die Elemente der Matrix A sind

$$a_{ij} \quad = A_{ij}^n \qquad (2.38)$$

$$a_{i,n1} = \sum_{j=1}^{n} B_{ij}^n \qquad (2.39)$$

Die letzte Zeile [n + 1) folgt aus der Kutta-Bedingung, für die gilt

$$\sum_{j=1}^{n}\left(A_{1j}^t + A_{nj}^t\right)\cdot\sigma_j + \tau\sum_{j=1}^{n}\left(B_{1j}^t + B_{nj}^t\right) = -V_\infty\cos(\alpha-\theta_1) - V_\infty\cos(\alpha-\theta_n) \qquad (2.40)$$

Die Koeffizienten für die letzte Zeile der Matrix *A* lauten damit

$$a_{n+1,j} \quad = A_{1j}^t + A_{nj}^t \qquad (2.41)$$

$$a_{n+1,n+1} = \sum_{j=1}^{n}\left(B_{1j}^t + B_{nj}^t\right). \qquad (2.42)$$

Die unbekannten Größen $\sigma_j$ und $\tau$ sind im Vektor $\vec{x}$ abgelegt

$$\vec{x} = (\sigma_1, \sigma_2 \ldots, \sigma_j, \tau)^T \qquad (2.43)$$

Der Lösungsvektor $\vec{b}$ enthält die bekannten Geschwindigkeiten aus der ungestörten Anströmung

$$b_i \quad = -V_\infty\sin(\alpha-\theta_i) \qquad (2.44)$$

$$b_{n+1} = -V_\infty\cos(\alpha-\theta_1) - V_\infty\cos(\alpha-\theta_n) \qquad (2.45)$$

Durch Lösen des Gleichungssystem können die Quellen- und Wirbelstärken bestimmt werden.

Für inkompressible Strömung ist der Druckbeiwert nur von der Geschwindigkeit abhängig. Nach Bernoulli gilt

$$c_{p,i} = 1.0 - \left(\frac{V_i^t}{V_\infty}\right)^2. \qquad (2.46)$$

Die Profilgeometrie wird bei dem instationären Panelverfahren wieder durch eine konstante Quellen- und Wirbelverteilung modelliert. Für instationäre Strömungszustände sind die Unbekannten zeitabhängig und werden deshalb im Folgenden durch den tiefgestellten Index $k$ gekennzeichnet. Zu jedem diskreten Zeitschritt $t_k (k = 0,1,2...)$ gehört eine Lösung $(\sigma_j)_k$ und $\tau_k$, wobei j wieder der Index der Panels ist.

Infolge der Zeitabhängigkeit der Quellen und Wirbel ist die Gesamtzirkulation $\Gamma_k$ um das Profil ebenfalls zeitabhängig. Nach Kelvin und Helmholtz muss die Gesamtzirkulation immer erhalten bleiben, weshalb sich hinter dem Profil ein Nachlauf ausbildet. Dieser Nachlauf besteht aus einem kontinuierlichen Wirbelfaden, der in der Summe den entgegengesetzten Betrag der Zirkulation um das Profil hat. Durch die oben erwähnte Zeitdiskretisierung wird der Nachlauf durch freie diskrete Wirbel modelliert, siehe Bild 2.3. Die Position und Stärke

Bild 2.3.: Diskretisierung des Nachlaufs, nach Katz und Plotkin (2001)

der Wirbel wurde, bis auf den im aktuellen Zeitschritt zusätzlich in den Nachlauf gegebenen Wirbel, bereits in vorherigen Zeitschritten ermittelt.

Cebeci etal. (2005) schlägt vor diesen Wirbel durch ein Panel an der Hinterkante zu repräsentieren, um der Kontinuität des Nachlauf gerecht zu werden. Die Wirbelstärke soll ebenfalls über dem Panel konstant sein. Dabei treten neben der Wirbelstärke zwei weitere Unbekannte auf, die Länge des Panels und dessen Anstellung zur x-Achse. Zu deren Lösung ist ein iteratives Verfahren notwendig weshalb hier zu Gunsten der Rechenzeit auf eine solche Umsetzung verzichtet wird. Stattdessen erfolgt die Modellierung durch eine Punktsingularität in Form eines diskreten Wirbels. Somit kommt lediglich als Unbekannte die Wirbelstärke $\Gamma_w$ hinzu. Die Wirbelstärke $\Gamma_w$ ergibt sich nach Kelvin-Helmholtz aus der Änderung der Gesamtzirkulation des aktuellen Zeitschritts zum vorherigen:

$$\Gamma_w = \Gamma_{k-1} - \Gamma_k. \qquad (2.47)$$

Da die den Nachlauf bildenden Panels nicht mit kontinuierlichen Wirbeln besetzt werden, ergibt sich ein Diskretisierungsfehler Um diesen Fehler zu minimieren, schlagen Katz und Plotkin (2001) vor, den diskreten Wirbel zwischen 20% und 30% der Panellänge zu platzieren. Die vorliegende Arbeit verwendet die Position $0,25 U_\infty \Delta t$. Für die Berechnung der tangentialen $(V_i^t)_k$ und normalen Geschwindigkeiten $(V_i^n)_k$ an den Kontrollpunkte werden die Gleichungen 2.25 und 2.26 um den Einfluss des Nachlauf, sowie der Profilbewegung erweitert:

$$(V_i^n)_k = \sum_{j=1}^{n}(A_{ij}^n)_k(\sigma_j)_k + \tau_k \sum_{j=1}^{n}(B_{ij}^n)_k + \sum_{m=1}^{k-1}(C_{i,m}^n)_k(\Gamma_{m-1}-\Gamma_m) + (D_i^n)_k\Gamma_w + V_{Stream}^n \quad (2.48)$$

$$(V_i^t)_k = \sum_{j=1}^{n}(A_{ij}^t)_k(\sigma_j)_k + \tau_k \sum_{j=1}^{n}(B_{ij}^t)_k + \sum_{m=1}^{k-1}(C_{i,m}^t)_k(\Gamma_{m-1}-\Gamma_m) + (D_i^t)_k\Gamma_w + V_{Stream}^t \quad (2.49)$$

$V_{Stream}$ setzt sich aus der ungestörten Anströmung und der kinematischen Geschwindigkeit des Kontrollpunkts $i$ zusammen. Diese wird durch die Profil und Klappenbewegung bestimmt. Auf die rechnerische Umsetzung wird in Kapitel 3 näher eingegangen.

Die Einflusskoeffizienten $(A_{ij}^n)_k$, $(A_{ij}^t)_k$, $(B_{ij}^n)_k$ und $(B_{ij}^t)_k$ werden wie im stationären Fall mit den Gleichungen 2.27, 2.28 und 2.29 berechnet. Die diskreten Wirbel des Nachlaufs, wie es in Bild 2.4 gezeigt wird, induzieren an den Kontrollpunkten die Geschwindigkeit

$$V_\theta = -\frac{\Gamma}{2\pi r}$$

Der Index $\theta$ verweist darauf, dass ein Wirbel nur Geschwindigkeiten senkrecht zu r induziert. Für die Einflusskoeffizienten $(D_i^n)_k$ und $(D_i^t)_k$ ergibt sich am Kontrollpunkt $i$

$$(D_i^n)_k = -\frac{z_s - z_{mi}}{2\pi r^2}\cos\theta_i \qquad (2.50)$$

$$(D_i^t)_k = \frac{x_s - x_{mi}}{2\pi r^2}\sin\theta_i \qquad (2.51)$$

wobei ($x_5$,$z_5$) die Koordinaten des Wirbels direkt an der Hinterkante sind. Ersetzt man in

Bild 2.4.: Induzierte Geschwindigkeit eines freien Wirbels auf Kontrollpunkt $i$

diesen beiden Gleichungen den Index $s$ mit m für die freien Wirbel im Nachlauf, erhält man die Einflusskoeffizienten $(C_{i,m}^n)_k$ und $(C_{i,m}^t)_k$:

$$(C_{i,m}^n)_k = -\frac{z_m - z_{mi}}{2\pi r^2}\cos\theta_i \qquad (2.52)$$

$$(C_{i,m}^t)_k = \frac{x_m - x_{mi}}{2\pi r^2}\sin\theta_i \qquad (2.53)$$

Bei zu großen Änderungsraten des Anstell- bzw. Klappenwinkels kann die Kutta-Bedingung unter Umständen nicht mehr erfüllt werden. Dann ist in der Regel keine angelegte Strömung mehr vorhanden. Aus der Bernoulli-Gleichung für instationäre Strömungen erhält man die Gleichung für die instationäre Kutta-Bedingung:

$$(V_1^t)_k^2 - (V_n^t)_k^2 = 2\left[\frac{\delta(\Phi_n - \Phi_1)}{\delta t}\right]_k = 2\left(\frac{\delta \Gamma}{\delta t}\right)_k. \qquad (2.54)$$

$\Phi_i$ ist das Geschwindigkeitspotential am i-ten Kontrollpunkt. Betrachtet man nur den stationären Fall, dann wird die rechte Seite dieser Gleichung zu null und man erhält wieder die oben schon aufgeführte Darstellung der Kutta-Bedingung. Die zeitliche Ableitung der Zirkulation kann mit Hilfe finiter Differenzen approximiert werden. Damit wird Gleichung 2.54 zu

$$(V_1^t)_k^2 - (V_n^t)_k^2 = 2l\frac{\tau_k - \tau_{k-1}}{t_k - t_{k-1}} \qquad (2.55)$$

wobei $l$ der Umfang des Profils ist.
Mit Hilfe der reduzierten Frequenz

$$k = \frac{\omega c}{2V_\infty} \qquad (2.56)$$

kann das Maß der Instationarität der Strömung abgeschätzt werden. Somit lässt sich eine Aussage darüber treffen, wann die Kutta-Bedingung ihre Gültigkeit verliert. In Gleichung 2.56 ist $\omega$ die Kreisfrequenz mit der sich das Profil in der Strömung bewegt. Ein Beispiel für Instationaritäten ist der in diesem Panelverfahren behandelte Nachlauf an der Hinterkante, der auf Grund von Klappenausschlägen und Anstellwinkeländerungen zustande kommt. Leishman (2006) gibt an, dass die Strömung für eine reduzierte Frequenz von k = 0 als stationär angenommen werden kann. Von $k = 0$ bis $k = 0.05$ kann quasi-stationär gerechnet werden. In diesem Fall sind die Kräfte aus instationären Effekten gegenüber den stationären vernachlässigbar klein. Mit zunehmender Frequenz gewinnen diese Effekte allerdings an Bedeutung und müssen in die Strömungsanalyse mit aufgenommen werden. Werden die Frequenzen zu hoch, kann es zu Strömungsablösung kommen. Die Kutta-Bedingung bietet für solche Fälle keine geeignete Randbedingung. Katz und Plotkin (2001) geben für die Gültigkeit der Kutta-Bedingung eine Obergrenze der reduzierten Frequenz von 1,0 an. Wie sich später zeigen wird, beschränken sich die in dieser Arbeit behandelten Probleme auf Frequenzen deutlich unter diesem Richtwert.
Mit der instationären Kutta-Bedingung und des Kelvin-Helmholtz-Theorems ergibt sich ein nichtlineares Gleichungssystem mit n+2 Unbekannten. Die Gleichungen i = 1,...,n erfüllen die kinematische Randbedingung an allen n Kontrollpunkten, i = n+1 die instationäre Kutta-Bedingung und $i$ = n+2 das Kelvin-Helmholz-Theorem. Für das Gleichungssystem aus 2.36 ergibt sich für die linke Seite:

$$\sum_{j=1}^{n}(A_{ij}^n)_k(\sigma_j)_k + \tau_k\sum_{j=1}^{n}(B_{ij}^n)_k + (D_i^n)_k\Gamma_w = b_i \qquad (2.57)$$

$$\left[\sum_{j=1}^{n}(A_{1j}^t)_k(\sigma_j)_k + \tau_k\sum_{j=1}^{n}(B_{1j}^t)_k + \sum_{m=1}^{k-1}(C_{1,m}^t)_k(\Gamma_{m-1} - \Gamma_m) + (D_1^t)_k\Gamma_w + V_{Stream}^t\right]^2$$

$$- \left[\sum_{j=1}^{n}(A_{nj}^t)_k(\sigma_j)_k + \tau_k\sum_{j=1}^{n}(B_{nj}^t)_k + \sum_{m=1}^{k-1}(C_{n,m}^t)_k(\Gamma_{m-1} - \Gamma_m) + (D_n^t)_k\Gamma_w + V_{Stream}^t\right]^2$$

$$- 2l\frac{\tau_k - \tau_{k-1}}{t_k - t_{k-1}} = b_{n+1} \qquad (2.58)$$

$$\tau_k l + \Gamma_w = b_{n+2} \qquad (2.59)$$

Da die Parameter der freien Wirbel im Nachlauf bereits bekannte Größen sind, werden diese auf die rechte Seite des Gleichungssystems gebracht. Der Lösungsvektor b ist dann

$$b_i = -V_{Stream}^t - \sum_{m=1}^{k-1}(C_{i,m})_k(\Gamma_{m-1} - \Gamma_m) \qquad (2.60)$$

$$b_{n+1} = 0 \qquad (2.61)$$

$$b_{n+2} = \Gamma_{k-1}. \qquad (2.62)$$

Durch Lösen des Gleichungssystems erhält man die gesuchten Quellen- und Wirbelstärken der Profilkontur und die Zirkulation des Wirbels an der Hinterkante. Setzt man $\theta_i$ in den

Gleichungen für die Einflusskoeffizienten gleich null, ergeben sich die Einflusskoeffizienten in x- und z-Richtung. Um die neuen Positionen der freien Wirbel für den nächsten Zeitschritt zu ermitteln, können die Gleichungen 2.25 und 2.26 benutzt werden. Es sind lediglich der Index n mit x und t mit z zu ersetzen. Mit der Größe des nächsten Zeitschritts sind die neuen Wirbelkoordinaten gegeben durch

$$(x_m)_{k+1} = (x_m)_k + (V_m^x)_k(t_{k+1} - t_k) \qquad (2.63)$$

$$(z_m)_{k+1} = (z_m)_k + (V_m^z)_k(t_{k+1} - t_k). \qquad (2.64)$$

Der im Zeitschritt k abgelöste Wirbel zählt im nächsten Zeitschritt k+1 zu den freien Wirbeln und ein neuer Wirbel bildet sich an der Hinterkante aus. In jedem Zeitschritt erhöht sich also die Anzahl der Wirbel im Nachlauf.

Für die Berechnung des Druckbeiwertes instationärer Strömungen muss die zeitliche Änderung des Geschwindigkeitspotentials berücksichtigt werden. Die instationäre Bernoulli-Gleichung liefert unter Verwendung des Differenzenquotienten den Druckbeiwert $(c_{p,i})_k$:

$$(c_{p,i})_k = \left(\frac{V_{Stream}^t}{V_\infty}\right)^2 - \left(\frac{(V_i^t)_k}{V_\infty}\right)^2 - 2\frac{(\Phi_i)_k - (\Phi_i)_{k-1}}{t_k - t_{k-1}}. \qquad (2.65)$$

Das Geschwindigkeitspotential kann durch Integration des Geschwindigkeitsfeldes entlang einer Stromlinie bestimmt werden, wie es in Bild 2.5 schematisch dargestellt ist. Aufgrund der kinematischen Randbedingung ist die Profiloberfläche wie bereits erwähnt eine Stromlinie, die stromaufwärts aus dem Unendlichen zum Staupunkt führt. Da nur Differenzen des

Bild 2.5.: Tangentiale Geschwindigkeiten entlang der Stromlinien

Potentials benötigt werden, reicht es die induzierten Geschwindigkeiten der Singularitäten zu betrachten. Ihr Einfluss nimmt mit zunehmendem Abstand $\left(\frac{1}{r}\right)$ vom Profil ab, sodass die induzierten Geschwindigkeiten stromaufwärts gegen Null gehen. Nach Cebeci et al. (2005) ist bei einem Abstand von 10c die Geschwindigkeit hinreichend klein, sodass ab diesem Punkt integriert werden kann. Der Einfachheit halber wird die $x$-Koordinate des Punkts auf - 10c gesetzt und $z$ über den Tangens von $\alpha$ bestimmt. Die Integration erfolgt zunächst bis zum Staupunkt. Dazu wird die Stromlinie in einzelne Panels unterteilt. Die Größe der Panels nimmt in Richtung des Profils regressiv ab, um ähnlich wie bei der Profildiskretisierung die Anzahl der verwendeten Panels zu minimieren. Die Geschwindigkeit wird in der Mitte der Panels bestimmt. Durch Multiplikation mit der panellänge und anschließendes Aufsummieren erhält man das Potential am Staupunkt:

$$(\Phi_{St})_k = \sum (V_l^t)_k \left[ (x_{l+1} - x_l)^2 + (z_{l+1} - z_l)^2 \right]^{\frac{1}{2}}. \qquad (2.66)$$

Der tangentiale Einheitsvektor an der Profiloberfläche zeigt immer in Richtung der Koordinatenreihenfolge, die an der Hinterkante beginnend auf der Unterseite nach vorne verlaufen und auf der Oberseite zurücklaufen. Das bedeutet, die Geschwindigkeiten links und rechts vom Staupunkt haben verschiedene Vorzeichen. Diese sind bei der Integration positiv zu zählen. Für das Geschwindigkeitspotential am $i$-ten Kontrollpunkt ergibt sich schließlich

$$(\Phi_i)_k = \begin{cases} (\Phi_{St})_k + \sum_{j=i_{St}}^{i-1} (V_j)_k \left[ (x_{j+1} - x_j)^2 + (z_{j+1} - z_j)^2 \right]^{\frac{1}{2}} & \text{für} \quad i_{St} \leq i \leq n \\ (\Phi_{St})_k + \sum_{j=i}^{i_{St}-1} \|(V_j)_k\| \left[ (x_{j+1} - x_j)^2 + (z_{j+1} - z_j)^2 \right]^{\frac{1}{2}} & \text{für} \quad 1 \leq i < i_{St} \end{cases} \qquad (2.67)$$

**Implementierung**

Im Folgenden wird beispielhaft eine Implementierungform des oben dargestellten Strömungs- und Strukturmodells in MATLAB dargestellt. Dabei wird auf MATLAB spezifische Funktionen, sowie deren recheneffiziente Anwendung eingegangen. Die Verifizierung für das stationäre Panelverfahren erfolgt mit Xfoil. Für das instationäre Verfahren wird die Wagnerfunktion als Referenz herangezogen. Abschließend wird auf die Kopplung des Struktur- und Strömungsmodells eingegangen und das verwendete Lösungsverfahren beschrieben. Der MATLAB-Code weiter unten dargestellt.

Das Panelverfahren (Hess-Smith-Panelverfahren) wurde in MATLAB mit mehreren Funktionen, den so genannten Function-Files realisiert. Diese enthalten den Algorithmus für die einzelnen Operationen.

Sie können unabhängig voneinander aufgerufen werden und ermitteln aus den Argumenten die entsprechenden Funktionswerte. Die Hauptfunktion des Panelverfahrens ist steady.m.

Nacheinander wird auf drei weitere Unterfunktionen zugegriffen. Diese arbeiten dann innerhalb der Umgebung von steady.m. Jede Funktion besitzt einen eigenen Workspace. Dabei handelt es sich um eigene Speicherbereiche, die für jede Funktion reserviert werden. Bei dem Aufruf einer Funktion wird ein neuer Speicherbereich erstellt, der solange die Funktion aktiv ist, bestehen bleibt. Die Variablen sind nur innerhalb dieser Funktion gültig. Ein Austausch zwischen den Workspaces ist nur mit entsprechenden Befehlen möglich. Nach dem Abschluss der Operation wird der Workspace gelöscht und nur Variablen die als Rückgabewert definiert sind, können für weitere Berechnungen verwendet werden. Benutzereingaben über das Command Window werden im so genannten *Base*-Speicherbereich abgelegt.

In der folgenden Auflistung werden die einzelnen Berechnungsschritte der Reihenfolge nach genannt. Sie werden innerhalb der steady.m-Umgebung abgearbeitet. In Klammern sind die Unterfunktionen notiert.

1. Erzeugung der Panels und Kontrollpunkte (distr.m)

2. Bestimmen der Einflusskoeffizienten aus 2.27, 2.28, 2.29 und 2.30 (inflcoeff.m)

3. Aufstellen des Lösungsvektors $\vec{b}$ und lösen des Gleichungssystem 2.36

4. Ermittlung der aerodynamischen Beiwerte (cp_dist.m)

Bild 3.1 zeigt den dazugehörigen Ablaufplan. Die Strömungsanalyse beginnt nachdem der Anstellwinkel $\alpha$ und die Profilgeometrie als Argumente an steady.m übergeben sind. Die Geometrie muss in einem so genannten Structure-Array (Datenfeld) abgelegt sein. Es handelt sich dabei um einen Datentyp der es erlaubt Skalare, Vektoren sowie Strings (Zeichenketten) in einer zusammenhängenden Variable im Workspace abzulegen. Auf diese Weise sind die Informationen über die Profilgeometrie in einer einzelnen Variablen gebündelt. Diese wird af genannt und hat den folgenden Aufbau:

**Bild 3.1.: Programmablaufplan des stationären Strömungslösers**

| af. x | $x$-Koordinaten der Geometrie |
| af. z | $z$-Koordinaten der Geometrie |
| af. xU | $x$-Koordinaten der Profiloberseite |
| af. zU | $z$-Koordinaten der Profiloberseite |
| af. xL | $x$-Koordinaten der Profilunterseite |
| af. zL | $z$-Koordinaten der Profilunterseite |
| af. xC | $x$-Koordinaten der Skelettlinie |
| af. zC | $z$-Koordinaten der Skelettlinie |

Der". "führt auf die untergeordneten Variablen. Für die stationäre Rechnung sind nur die ersten beiden Variablen relevant. Sie enthalten die Profilkoordinaten als Vektoren.

Zunächst müssen die Kontrollpunkt und Winkel $\theta_i$ der Panels erzeugt werden. Dazu ruft steady.m die Unterfunktion distr.m auf. Als Argument werden die Profilkoordinaten übergeben. Bei der Berechnung des Panelwinkels $\theta_i$ (2.19) muss auf die Wahl des Arkustangens geachtet werden. Der einfache Arkustangens bietet nicht die Möglichkeit die Winkel für jede Lage des Panels korrekt darzustellen. Der Wertebereich beschränkt sich auf $-\frac{\pi}{2} < \arctan(x) < \frac{\pi}{2}$. In vielen Programmiersprachen gibt es deshalb eine Arkustangensfunktion, die mit zwei Argumenten aufgerufen wird. Diese dient zur Umrechnung von kartesischen Koordinaten in Polarkoordinaten und ist daher über alle vier Quadranten definiert. In MATLAB wird diese Funktion mit atan2 aufgerufen. Gleichung 2.19 nimmt dann die Gestalt

```
theta(ii) = atan2((-af.z(ii) + af.z(ii+1)), (-af.x(ii) + af.x(ii+1)))
```

an. Der Winkel wird in Radianten ausgegeben. Wenn nicht anders vermerkt gilt dies für alle folgenden Berechnungen in denen Winkel auftreten. Die Koordinaten der Kontrollpunkte werden mit Gleichung 2.23 und 2.24 bestimmt. Die Rückgabewerte sind in einem neuen Structure-Array abgelegt. Es hat den folgenden Aufbau

coord. theta    $\theta_i$

| coord. n_x | Normaleneinheitsvektor der Panels in $x$-Richtung |
| coord. n_z | Normaleneinheitsvektor der Panels in $z$-Richtung |
| coord. t_x | Tangenteneinheitsvektor der Panels in $x$-Richtung |
| coord. t_z | Tangenteneinheitsvektor den Panels in $z$-Richtung |
| coord. x_mi | $x_{mi}$ |
| coord. z_mi | $z_{mi}$ |

Mit den ermittelten Kontrollpunkten und Paneldaten werden in der Funktion inflcoeff.m die Einflusskoeffizienten der Quellen und Wirbel berechnet. Um die Winkel korrekt zu berechnen, muss für $\beta_{i,j}$ aus Gleichung 2.34 wieder der Arkustanges mit zwei Argumenten verwendet werden. Die Matrix $A$ (Gleichung 2.37) ist als Lösungsmatrix mit dem Buchstaben I versehen. Die letzte Zeile dieser Matrix enthält die Kutta-Bedingung, die aus Gleichung 2.40 hervorgeht. Das Gleichungssystem 2.36 kann in MATLAB durch den *Backslash*-Operator gelöst werden. Der Operator testet zunächst die Eigenschaften der Matrix I und entscheidet dann, welche Lösungsstrategie am besten geeignet ist. Da die Matrix I quadratisch und voll besetzt ist, sowie keine Symmetrie aufweist, wird die Gauß-Elimination angewendet (Schweizer (2009)). Der Befehl wird direkt in der Hauptfunktion ausgeführt und lautet:

```
Sing = I\b
```

Sing ist der Losungvektor, wie er in Gleichung 2.43 definiert ist. Im Allgemeinen sollte von der Lösung eines linearen Gleichungssystems über die direkte Bestimmung der Inversen der Matrix I mittels der Funktion inv(I) abgesehen werden. Der *Backslash*-Operator ist hinsichtlich der Rechenzeit vor allem bei großen Matrizen für solche Berechnungen günstiger.

Aus den ermittelten Quellen- und Wirbelstärken kann mit 2.26 das Geschwindigkeitsfeld entlang der Profiloberfläche ermittelt werden. Daraus errechnet die Unterfunktion cp_dist.m die Druckverteilung (2.46). Die Integration des Druckes entlang der Profiloberfläche liefert die resultierende Kraft, die auf das Profil wirkt. Ihre Komponente senkrecht zur Anströmung ergibt den Auftriebsbeiwert $c_L$. Aufgrund der Definition der Kontrollpunk-

(a) Mittelpunktsregel          (b) Diskretisierung der Geometrie

Bild 3.2.: Berechnung des Auftriebsbeiwert $c_L$

te wird zur Integration des Drucks die Mittelpunktsregel angewendet, vergleiche hierzu Bild 3.2a. Der kontinuierliche Verlauf zeigt die Druckverteilung für $n \to \infty$. Die Berechnung mit dem Strömungslöser liefert diskrete Werte an den Stellen $x_{mi}$. Diese werden mit der Panellänge multipliziert. Die Druckbeiwert werden in ihre $x$- und $z$-Komponenten zerlegt (Bild 3.2b) und ihr Anteil senkrecht zur Anströmung bestimmt. Summation über alle Panels ergibt für $c_L$

$$c_L = \sum_{i=1}^{n} \left( c_{p,i} \Delta x \cos \alpha + c_{p,i} \Delta z \sin \alpha \right) \tag{3.1}$$

$$\Delta x = x_{i+1} - x_i$$

$$\Delta z = z_{i+1} - z_i.$$

Als Rückgabewerte der Funktion steady.m können cp, cL, cD, coord, Sing, An und At zurückgegeben werden. Der vollständige Befehl zum Aufrufen des Strömungslösers lautet [cp cL cD coord Sing An At] = steady(af, alpha)

Tabelle 3.1 listet alle verwendeten Variablennamen, ihre physikalische Bedeutung und den Datentyp der Variablen auf.

**Tabelle 3.1.:** Nomenklatur der in steady. m verwendeten Variablen

| Variable | Beschreibung | Datentyp |
|---|---|---|
| alpha | Anstellwinkel $\alpha$ | Skalar |
| af | enthält die Profilgeometrie | Struct-Array |
| coord | enthält die Diskretisierung des Profils (Paneldaten) | Struct-Array |
| An, At, 3n, Bt | Einflusskoeffizienten | Matrix |
| I | Lösungsmatrix mit Kutta-Bedingung | Matrix |
| b | Geschwindigkeitskomponenten aus der freien Anströmung | Vektor |
| Sing | Werte der Singularitäten ($\sigma_j$ und $\tau$) | Vektor |
| cp | Druckverteilung $c_p$ | Vektor |
| cL | Auftriebsbeiwert $c_L$ | Skalar |

Des Weiteren existiert für den stationären Strömungslöser eine grafische Benutzeroberfläche. Gestartet werden kann die Benutzeroberfläche mit dem Befehl gui im Command Window. Bild 3.3 zeigt den Screenshot mit bereits gelaufener Rechnung. Das obere Diagramm auf der linken Seite gibt die Verteilung des Druckbeiwerts über der Tiefe des Profils wieder. Das untere Diagramm zeigt die Profilkoordinaten. Weiterhin ist die Skelettlinie dargestellt. Die rechte Seite der Benutzeroberfläche ermöglicht die Eingabe der Strömungsparameter. Im Block *Airfoil* gibt es zwei verschiedene Möglichkeiten zum Erstellen des Profils. Für die Erstellung von vier- und fünfstellige NACA-Profilen sind die Profilgeneratoren von (Jayaraman und Jayaraman) integriert. Dieser erstellt aus der NACA Profilnummer und der eingegebenen Panelzahl die Profilkoordinaten. Die Verteilung der Knotenpunkte erfolgt nach Gleichung 2.18. Das Laden externer Profilkoordinaten erfolgt über die Eingabe Load *Arfoil.* Die Datei muss im ASCII-Farmat vorliegen. Die Klappeneinstellung erfolgt für die Vorderkante im Block *Leading-Edge* und für die Hinterkante im Block *Trailing-Edge.* Die Winkel werden in Grad eingegeben. Die *x*-Koordinaten sind bezogen auf die Profiltiefe c. Daraus berechnet die Funktion rot.m die Profiloberfläche mit ausgelenkten Klappen. Auf den Algorithmus wird in Kapitel 3.4 eingegangen. Der Anstellwinkel wird im Block *Parameter* im Feld *AoA* in Grad eingegeben. Mit *Start* wird die Rechnung ausgeführt. Das Profil wird mit den gewählten Parametern erstellt und im *Base*-Worspace unter dem Namen af2 abgelegt. *Save cp* bietet die Möglichkeit die Druckverteilung in eine Datei zu exportieren. Die Datei enthält zwei Spalten, in der ersten werden die Koordinaten $x_{mi}$ und in der zweiten die Druckwert $c_{p,i}$ gespeichert. Als Trennzeichen ist das Tab gewählt. Die Dateiendung wird vom Benutzer festgelegt. Die Zeichenkodierung erfolgt im ASCII-Format. Der Block *Results* zeigt die Ergebnisse für den Aufstriebs- und Widerstandsbeiwert.

**Bild 3.3.: Screenshot der GUI für das stationären Panelverfahrens**

Das instationäre Panelverfahren baut auf der Funktion steady .m auf. Die Erweiterung der Funktion wird unsteady.m genannt Es wird eine Schleife eingeführt, die in jedem Zeitschritt innerhalb von unsteady.m die in Kapitel 2.1.3 aufgeführten Berechnungsschritte durchführt. Einen Überblick liefert das Bild 3.4. Die Blöcke mit doppeltem Seitenrand sind Berechnungsschritte die in eigenen Unterfunktionen implementiert wurden. 3.5 zeigt den Programmablaufplan.

Tabelle 3.2 listet die zu Tabelle 3.1 hinzugekommenen Variablen auf. Einige Variablen werden von mehreren Unterfunktionen benötigt. Daher werden diese Variablen im so genannten *global*-Workspace abgelegt. Es handelt sich dabei um einen Speicherbereich der für alle Funktionen in MATLAB zugänglich ist Damit wird der Austausch von Variablen vereinfacht. Dazu gehören die Variablen An, At, Bn, Bt, Cn, Ct, Dn, Dt, Phi_alt, af, af0, coord, x_shed und z_shed. Um auf diesen Workspace zugreifen zu können, müssen die zu verwendenden Variablen global definiert werden. Das geschieht mit dem Befehl global gefolgt von den Variablennamen.

Die instationäre Rechnung erfordert die Festlegung von Anfangswerten. Nach 2.55 und 2.65 sind für jede Berechnung Werte aus vorherigen Zeitschritten nötig. Zum Zeitpunkt $t_0$ müssen diese Anfangswerte bereitstehen. Hierzu ist die Funktion init. m zuständig. Sie berechnet zunächst mit Hilfe von steady. m aus den Argumenten af0 und alpha eine

Bild 3.4.: Ablaufplan der Berechnungsschritte für das instationäre Panelverfahren

**Bild 3.5.:** Programmablaufplan für die aufgerufenen Funktionen des instationären Strömungslösers

Tabelle 3.2.: Nomenklatur der in unsteady.m verwendeten zusätzlichen Variablen

| Variable | Beschreibung | Art |
|---|---|---|
| aipha | Anstellwinkel $\alpha$ | Skalar/Vektor |
| t | Zeit | Vektor |
| af0 | enthält die unveränderte Profilgeometrie | Struct-Array |
| af | enthält die neue Profilgeometrie | Struct-Array |
| Cn, Ct, Dn, Dt | Einflusskoeffizienten des Nachlaufs | Matrix |
| b | Geschwindigkeitskomponenten aus der freien Anströmung und der kinematischen Bewegung | Vektor |
| LE | Klappenwinkel Vorderkante $\gamma$ | Skalar |
| TE | Klappenwinkel Hinterkante | Skalar |
| LEO | Klappenwinkel Vorderkante vorheriger Zeitschritt | Skalar |
| TEO C1 | Klappenwinkel Hinterkante vorheriger Zeitschritt | Skalar |
| xLE | x-Koordinate des Klappendrehpunkts der Vorderkante | Skalar |
| xTE | x-Koordinate des Klappendrehpunkts der Hinterkante | Skalar |
| Phi_neu | Geschwindigkeitspotential des aktuellen Zeitpunkts | Vektor |
| Phi_alt | Geschwindigkeitspotential des vorherigen Zeitpunkts | Vektor |
| Vor | Wirbelstärken der Wirbel im Nachlauf | Vektor |
| x_w | x-Koordinate der Wirbel im Nachlauf | Vektor |
| z_w | z-Koordinate der Wirbel im Nachlauf | Vektor |
| tau | Wirbelstärke am Profil | Vektor |
| Sing | Wert der Singularitäten $((\sigma_j)_k, \tau_k$ und $\Gamma_w)$ | Vektor |

stationäre Anfangslösung für die Quellen- und Wirbelverteilung. Daraus wird das Geschwindigkeitspotential mit der Funktion vel_pot. m bestimmt, auf die Umsetzung wird im Laufe dieses Kapitels noch näher eingegangen. Mit diesen Anfangswerten kann die Rechnung mit unsteady.m gestartet werden. Zu Beginn werden die neuen Positionen der freien Wirbeln im Nachlauf nach 2.63 und 2.64 bestimmt. Die Geschwindigkeiten in *x*- und in *z*-Richtung werden in der Unterfunktion vel. m berechnet. Die Funktion rot. m erstellt die neuen Profilkoordinaten mit ausgelenkten Klappen. Mit der Funktion distr. m werden für die neue Profilgeometrie die Panels und Kontrollpunkte erstellt, inflcoeff.m berechnet die Einflusskoeffizienten der Panels. Die beiden zuletzt genannten Funktionen bleiben gegenüber dem stationären Löser unverändert. Die Modellierung des Nachlaufs erfolgt mit diskreten Wirbeln. Ihr Einfluss auf die Kontrollpunkte wird mit 2.50, 2.51, 2.52 und 2.53 in den Unterfunktionen shedinfl.m bzw. winfl.m bestimmt. Sie benötigen als Argumente die Positionen der Wirbel $(x_s, z_s)$, bzw. $(x_m, z_m)$. Als nächstes wird die rechte Seite des Gleichungssystem nach 2.60, 2.61 und 2.62 aufgestellt. Dazu dient die Unterfunktion RHS.m. $V_{\text{Stream}}$ wird aus der geometrischen Geschwindigkeit und der Anströmgeschwindigkeit berechnet. Diese Rechnung wurde mit der Unterfunktion vkin.m realisiert. Als Argumente wird die Differenz der Klappenwinkel und die Koordinaten der Klappendrehpunkte übergeben. Aus der Differenz der Klappenwinkel wird mit der Größe des Zeitschritts $\Delta t$ die Winkelgeschwindigkeit bestimmt. Über den Satz von Euler ist für die Punkte der Klappen die Geschwindigkeit durch

$$V_{geo,i}^x = -\omega \Delta z \qquad (3.2)$$

$$V_{geo,i}^z = \omega \Delta x \qquad (3.3)$$

gegeben, wobei $\Delta z$ und $\Delta x$ die Abstände der Kontrollpunkte zum Drehpunkt sind. Die Geschwindigkeiten werden an RHS.m zurückgegeben.

Das Lösen des nichtlinearen Gleichungssystems aus 2.57, 2.58 und 2.59 erfolgt mit der MATLAB eigenen Funktion fsolve. Dazu muss das Gleichungssystem in eine eigene Funktion geschrieben werden, die GLS. m genannt wird. MATLAB nutzt zur Lösung des Systems ein iteratives Verfahren. Als Anfangswerte werden die Quellen- und Wirbetstärken des vorherigen Zeitschritts verwendet. Sie werden im Vektor sing0 übergeben. Mit dem Rückgabewert exitflag kann die Lösung auf Konvergenz geprüft werden. Wird als Wert exitflag = 1 zurückgegeben, ist der Iterationsprozess erfolgreich, andernfalls wird die Berechnung abgebrochen.

Mit den nun bekannten Quellen- und Wirbelstärken wird die Druckverteilung bestimmt. Dazu muss zunächst das Geschwindigkeitspotential an jedem Kontrollpunkt berechnet werden. Wie in Abschnitt 2.1.3 schon erwähnt, findet am Staupunkt ein Vorzeichenwechsel der Geschwindigkeiten statt. In MATLAB kann ein Vorzeichenwechsel mit der Funktion sign ermittelt werden. Diese wird auf einen Vektor vtang, der die induzierten Geschwindigkeiten an den Kontrollpunkten enthält, angewendet. sign gibt als Rückgabewert einen vektor zurück, der für positive Einträge von vtang den Wert 1 und für negative -1 annimmt. Der gesamte Befehl lautet

vorzeichen = sign(vtang);

staupkt = find(diff(vorzeichen) >0);

Die Koordinaten des Staupunkts lassen sich mit den Befehlen

coord.x_mi (staupkt)

coord. z_mi (staupkt) ausgeben. Über 2.66 und 2.67 kann das Geschwindigkeitspotential der Kontrollpunkte bestimmt werden. Das Geschwindigkeitspotential wird als Vektor zurückgegeben. Mit unstcp. m wird die Druckverteilung über Gleichung 2.65 berechnet. Die Integration folgt der in Abschnitt 3.1 gegebenen Beschreibung.

Die Verifizierung des stationären Panelverfahren erfolgt durch einen Vergleich mit Xfoil. Xfoil wurde in den 80er Jahren am Massachusetts Institute of Technology von Drela (1989) entwickelt. Die Quellenverteilungen werden wie bei der HSPM über den Panels als konstant angenommen. Die Wirbelverteilungen werden hingegeben mit einem linearen Vorlauf approximiert.

Mit Hilfe der beiden Verfahren ist die Druckverteilung eines NACA 0012 Profils ermittelt worden. Die Ergebnisse sind in Bild 3.6a für einen Anstellwinkel von 5° und in Bild 3.6b für einen Anstellwinkel von 10° dargestellt. Es ist zu erkennen, dass HSPM dieselben Ergebnisse liefert wie Xfoil. D.h. die Annahme die Wirbelstärke entlang eines Panels als konstant zu betrachten hat keinen signifikanten Einfluss auf die Genauigkeit des Ergebnisses.

Als zweites Profil wurde das NACA $64_3618$ betrachtet. Die Druckverläufe sind in Bild 3.7a für $\alpha$ = -5°, in 3.7b für $\alpha$ = 0°, in 3.7c für $\alpha$ = 5° und in 3.7d für $\alpha$ = 10° abgebildet. An der Hinterkante sind kleine Abweichungen zu erkennen. Diese sind auf die geringe Anzahl an Profilkoordinaten zurückzuführen, die aus Abbot und von Doenhoff (1959) entnommen sind. Erfahrungsgemäß reagieren sowohl Xfoil als auch HSPM empfindlich auf die Qualität der Profilkoordinaten. In der vorliegenden Arbeit ist die Anzahl der Koordinaten durch eine Spline-Interpolation erhöht worden. Es ist jedoch zu empfehlen, die Ergebnisse bei Verwendung neuer Koordinaten explizit zu prüfen.

Der Auftriebsbeiwert erfolgt aus der Integration des Druckverlaufs. Durch einen Vergleich der Beiwerte kann die implementierte Integratiorsmethode überprüft werden. Bild 3.8a zeigt

Bild 3.6.: Vergleich Xfoil mit HSPM für das NACA 0012, Panelzahl $n = 300$

das $c_L$-$\alpha$-Diagramm für das NACA 0012 und 3.8b für das NACA $64_3618$. Die Integration von HSPM stimmt mit der von Xfoil überein. Die gestrichelte Linie stellt den viskosen $c_L$ verlauf dar. Bei Anstellwinkel bis 15° weist die Potentialtheorie eine gute übereinstimmung mit den reibungsbehafteten Werten auf. Bei größeren Anstellwinkel kommt es zu Strömungsablösung und in Folge dessen zum Einbruch des Auftriebs. Diese Ablösung ist auf Reibung zu-

**Bild 3.8.:** Verlauf des Auftriebsbeiwertes $c_L$ in Abhängigkeit von $\alpha$, Panelzahl $n = 300$

rückzuführen und kann daher nicht allein mit der Potentialtheorie berücksichtigt werden.

Die Genauigkeit der Berechnung hängt wesentlich von der Anzahl verwendeter Panels ab. Dieser Einfluss wird in Bild 3.9 am Beispiel des NACA 0012 ($\alpha = 10°$) deutlich. Die durchgezogene Linie zeigt den ermittleten Druckverlauf für eine Panelzahl n von 200. Im Vergleich dazu wurde eine Rechnung mit 20 Panels durchgeführt (strichpunktierte Linie). Es ist klar zu erkennen, dass der Bereich an der Vorderkante, d.h. die Saugspitze sowie der Staupunkt bei zu geringer Auflösung nicht richtig abgebildet wird.

**Bild 3.9.:** Verlauf der Druckbeiwerte für verschiedene Panelzahlen; NACA 0012; $\alpha = 10°$

Der Genauigkeit einer Rechnung steht der Anstieg der Rechenzeit gegenüber, die mit steigender Panelzahl einhergeht. Des Weiteren greift das instationäre Panelverfahren in jedem Zeitschritt auf die Algorithmen des stationären Lösers zu. Für die Bestimmung der optimalen Panelzahl wurden die Extremwerte der Druckverteilung, d.h $c_{p,min}$ und $c_{p,max}$, für unterschiedliche Panelzahlen mit einer Referenzrechnung von 1000 Panels verglichen. Das Ergebnis wird in Bild 3.10a für das NACA 0012 und in Bild 3.10b für das NACA 4415 gezeigt. Für beide Beispiele liegt die Abweichung für eine Panelzahl von 300 unter 0,1% ($\Delta c_p = 4,9 \cdot 10^{-3}$). Die Rechenzeit liegt bei $t = 0,41s$, siehe Bild 3.11. Alle in dieser Arbeit vorgestellten Rechnungen werden mit einer Panelzahl von n = 300 durchgeführt.

Das instationäre Verfahren wird mit der Theorie von Wagner (1925) verifiziert. Die Theorie ermöglicht die Berechnung des instationären Auftriebs einer ebenen Platte bei Änderung

**(a)** NACA 0012      **(b)** NACA 4415

**Bild 3.10.:** Abweichung vom Endwert in Abhängigkeit der Panelzahl

**Bild 3.11.:** Rechenzeit in Abhängigkeit der Panelzahl

des Anstellwinkels. Dazu wird die so genannte Wagner-Funktion mit dem quasi-stationären Auftrieb $c_{L,st}$ überlagert. Die Funktion beschreibt den Einfluss des Nachlaufs auf die ebene Platte und wird mit $\phi(s)$ bezeichnet, wobei s für die dimensionslose Zeit steht und über

$$s(t) = \frac{2}{c} \int_0^t V_\infty \, dt \qquad\qquad (3.4)$$

definiert ist. Der instationäre Auftrieb ergibt sich dann zu:

$$c_L(s) = c_{L,st}\,\phi(s) \qquad\qquad (3.5)$$

Eine plötzliche Änderung des Anstellwinkels führt bei quasi-stationärer Berechnung zu einem konstanten $c_L$-Verlauf. Die Wagner-Funktion liefert mit 3.5 einen exponentiell anwachsenden Auftrieb und berücksichtigt somit den Einfluss des sich ausbildenden Nachlaufs. Für die Wagner-Funktion lassen sich in der Literatur unterschiedliche Approximationen finden.

Die in dieser Arbeit verwendete Funktion geht auf Jones (1938) zurück und ist gegeben durch:

$$\phi(s) \approx 1,0 - 0,165e^{-0,0455s} - 0,335e^{-0,3s}. \qquad (3.6)$$

Bild 3.12 zeigt den Verlauf der Wagner-Funktion, wobei die Ordinate den Bezug zum quasi-

Bild 3.12.: Die Wagner-Funktion

stationären Auftrieb $c_{L,st}$ darstellt. Für $s\to\infty$ konvergiert die Wagner-Funktion gegen $c_{L,st}$.

Da die ebene Platte in der Theorie infinitesimal dünn ist, wird, um den Vergleich mit dem Panelverfahren zu ermöglichen, das NACA 0001 für die Verifikation verwendet. Das Ergebnis ist in Bild 3.13 zu sehen. Es ist eine gute übereinstimmung zu erkennen. Die Ergebnisse für

Bild 3.13.: Vergleich des instationären Panelverfahrens mit der Wagner-Funktion für unterschiedliche Profildicken

das NACA 0012 und das NACA 0030 verdeutlichen die Bedeutung der Profildicke auf das instationäre Verhalten. Der Einfluss des Nachlauf nimmt mit steigender Profildicke zu. Da in der vorliegenden Arbeit Profile mit einer Dicke von 18% berechnet werden, zeigt sich hier die Notwendigkeit in der Verwendung eines Panelverfahrens.

Des Weiteren können die Berechnungen durch Strömungsvisualisierung mit theoretischen überlegungen verglichen werden. Wird der Anstellwinkel plötzlich geändert, bilden sich im Nachlauf Wirbel aus. Wirbel die unmittelbar nach der Anstellwinkeländerung in den Nachlauf abgegeben werden, haben auf Grund der großen Änderung der Profilzirkulation eine hohe Wirbelstärke. Dadurch induzieren sie in ihrer Umgebung hohe Geschwindigkeiten und beeinflussen stark die Strömungsriehtungen ihrer benachbarten Wirbel. Diese Wechselwirkung hat zur Folge, dass der Nachlauf sich stromabwärts aufrollt.

**Bild 3.14.:** Strömungsvisualisierung für eine Anstellwinkeländerung von $\alpha = 0°$ auf $\alpha = 10°$, NACA 0012

Dieser Effekt kann mit dem instationären Verfahren gezeigt werden. Bild 3.14 zeigt das Ergebnis einer plötzlichen Anstellwinkeländerung von $\alpha = 0°$ auf $\alpha = 10°$. Die Kreise repräsentieren einzelne diskrete Wirbel.

**Bild 3.15.:** Strömungsvisualisierung für eine sinusförmige Anstellwinkeländerung $\alpha = 10° \sin(2t)$, $k = 2,0$, NACA 0012

Führt das Profil in der Strömung eine sinusförmige Bewegung aus, führt das zur Ausbildung der *Kármánschen Wirbelstraße*. Für eine reduzierte Frequenz von k = 2,0 erhält man mit Hilfe des Panelverfahren das in Bild 3.15 gezeigte Ergebnis. Die Dreiecke und Kreise sind Wirbel mit jeweils entgegengesetzten Vorzeichen.
Wie in Kapitel 2.1.3 beschrieben, ist die reduzierte Frequenz ein Maß für die Instationarität einer Strömung. Bild 3.16 zeigt einen Vergleich verschiedener reduzierter Frequenzen mit der stationären Lösung. Der Anstellwinkel folgt einem sinusförmigen Verlauf :

$$\alpha(t) = 5° + 5° \sin(\omega t) \qquad (3.7)$$

wobei $\omega$ die Kreisfrequenz ist und über 2.56 bestimmt wird. Die Zeit $t$ ist mit der Periodendauer $T$ entdimensioniert worden. Die durchgezogene Linie gibt den quasi-stationären Auf triebsbeiwert $c_{L,st}$ wieder. Durch den Einfluss des Nachlaufs ist der Verlauf der instationären Betrachtung phasenverschoben. Der Auftrieb stellt sich, wie von Wagner (1925) beschrieben, verzögert ein. Die abgelösten Wirbel an der Hinterkante induzieren Geschwindigkeiten, die einen effektiv geringeren Anstellwinkel verursachen. Dadurch sind die Ampliduten kleiner als bei quasi-stationärer Betrachtung. Für eine reduzierte Frequenz von k = 1 (gepunktete Linie) weicht die instationäre Rechnung deutlich von der stationären Lösung ab. Mit kleiner werdender reduzierter Frequenz verringert sich der Einfluss des Nachlaufs. Für reduzierte Frequenzen unterhalb 0,01 liefern das stationäre und instationäre Modell dieselben Ergebnisse. Da in der vorliegende Arbeit Anstellwinkeländerungen betrachtet werden, die im Frequenzbereich k ≤ 0,01 liegen, werden die aeroelastischen Simulationen mit Blick auf die Rechenzeit mit dem stationären Panelverfahren durchgeführt. Die ist insofern möglich, da in dieser Arbeit der Dreh- und Schlagfreiheitsgrad resultierend aus der Gesamtelastizität des Flügels nicht berücksichtigt wird.

**Bild 3.16.:** Auftriebsbeiwert $c_L$ in Abhängigkeit der reduzierten Frequenz; NACA 0012;
$$\alpha(t) = 5° + 5° \sin(\omega t)$$

Die Bewegungsgleichung aus 2.69 wird in MATLAB mit einem ode-Löser berechnet. Dabei handelt es sich um MATLAB eigene Funktionen zur Lösung von gewöhnlichen Differentialgleichungen erster Ordnung. MATLAB stellt unterschiedliche Lösungsverfahren zu Verfügung. In dieser Arbeit wird der ode23s-Löser verwendet. Dieser basiert auf einem Runge-*Kutta-Rosenbrock-Verfahren* und eignet sich für steife Differentialgleichungen.

Bild 3.17 zeigt den Programmablaufplan zur Lösung der Bewegungsgleichung. Gestartet wird die Rechnung mit dem Skript dgl.m. Es werden die Anfangsbedingungen und Parameter erstellt und an den ode23s-Löser übergeben. Dieser führt das Integrationsverfahren durch. Dabei greift MATLAB in jedem Iterationsschritt auf die Bewegungsgleichung zu.

**Bild 3.17.: Programmablaufplan des FSI-Lösers**

Die ode-Löser fordern eine Umformulierung der Bewegungsgleichung, die auf ein Differentialgleichungssystem erster Ordnung führt. Mit $\gamma_1 = \gamma$ und $\gamma_2 = \gamma$ wird 2.69 zu

$$\dot{\gamma}_1 = \gamma_2$$

$$\dot{\gamma}_2 = -\frac{k_\gamma}{(\theta_l + \theta_t i^2)}\gamma_1 - \frac{d_\beta i}{(\theta_l + \theta_t i^2)}\gamma_2 + \frac{\rho V_\infty^2 c^2 b}{2(\theta_l + \theta_t i^2)}\left(c_{M_{LE}} + c_{M_{TE}}\right). \qquad (3.8)$$

Das Differentialgleichungssystem ist in der Funktion daschw.m abgelegt. Als Argument wird von dem ode-Löser die Zeit $t$ des aktuellen Iterationsschritts, sowie die Klappenauslenkung $\gamma$ und die Geschwindigkeit $\gamma$ übergeben. Zur Berechnung der Momentenbeiwerte $c_{M_{te}}$ und $c_{M_{te}}$ wird die Unterfunktion RS_st. m aufgerufen. Sie bildet die Schnittstelle zwischen Strukturmodell und Aerodynamik. Zunächst wird mit $t$ der Anstellwinkel für den aktuellen Iterationsschritt bestimmt. Das geschieht mit der Funktion par. m. Sie beinhaltet den Vorlauf des Anstellwinkels $\alpha(t)$ über der Zeit $t$ in Form einer Gleichung. Werden Anstelwinkel aus einer externen Datei geladen, wird mit Hilfe einer Spline-Interpolation ein kontinuierlicher Verlauf erzeugt rot. m erzeugt aus dem übergebenen Klappenwinkel die transformierten Profilkoordinaten. Als Argumente werden die Profilkontur af, die Klappenauslenkungen $\gamma$ und $\beta$ und die $x$-Koordinaten $x_{te}$ und $x_{te}$ der Klappendrehpunkte übergeben. Die Drehpunkte befinden sich auf der Skelettlinie. Ihre $z$-Komponenten werden mit einer Spline-Interpolation der Skelettlinie ermittelt Die Profilpunkte der Klappen werden mit Hilfe einer Drehmatrix transformiert:

$$\begin{pmatrix} x_{kl,i} \\ z_{kl,i} \end{pmatrix} = \begin{bmatrix} \cos(-\gamma) & \sin(-\gamma) \\ \sin(-\gamma) & \cos(-\gamma) \end{bmatrix} \cdot \begin{pmatrix} x_i \\ z_i \end{pmatrix} \qquad \text{für} \quad x_i \leq x_{le} \qquad (3.9)$$

$$\begin{pmatrix} x_{kl,i} \\ z_{kl,i} \end{pmatrix} = \begin{bmatrix} \cos(\beta) & \sin(\beta) \\ \sin(\beta) & \cos(\beta) \end{bmatrix} \cdot \begin{pmatrix} x_i \\ z_i \end{pmatrix} \qquad \text{für} \quad x_i \geq x_{te} \qquad (3.10)$$

Da sich die Vorderkantenklappe im mathematisch negativen Sinn dreht, wird $\gamma$ negativ gezählt. Bild 3.18 zeigt das Ergebnis einer Klappenauslenkung für $\gamma = 5°$ und $\beta = 10°$ am Beispiel des NACA $64_3618$. Die strichpunktierte Linie zeigt das Profil in unausgelenktem Zustand, die durchgezogene Linie die Transformation mit Hilfe der Drehmatrix 3.9 und 3.10. Mit den Profilkoordinaten und dem Anstellwinkel wird über ste ady. m das Panelverfahren

**Bild 3.18.: Klappenauslenkung, erzeugt mit rot.m, NACA $64_3618$; $\gamma = 5°$; $\beta = 10°$; $x_{le} = 0,2$; $x_{te} = 0,7$**

gestartet. Die Druckverteilung wird an die Funktion momente. m übergeben. Diese berechnet die Klappenmomente mit Hilfe der in Abschnitt 3.1 beschriebenen Integrationsmethode für den Auftriebsbeiwert, wobei sich die Integrationsgrenzen auf die Kontrollpunkte der Klappen beschränken:

$$c_{M_{LE}} = \sum_{i=1}^{k} \left( c_{p,i} \Delta x \left( x_{mi} - x_{le} \right) + c_{p,i} \Delta z \left( z_{mi} - z_{le} \right) \right) \qquad \text{für} \quad x_k \leq x_{le}$$

$$c_{M_{TE}} = \sum_{i=1}^{k} \left( c_{p,i} \Delta x \left( x_{mi} - x_{te} \right) + c_{p,i} \Delta z \left( z_{mi} - z_{le} \right) \right) \qquad \text{für} \quad x_k \geq x_{te}. \qquad (3.11)$$

Die Momente werden an daschw.m zurückgegeben und in das Gleichungssystem 3.8 eingesetzt Die Konvergenz der numerischen Integration in jedem Zeitschritt wird vom ode -Löser selbst überprüft. Zur recheneffizienten Lösung des Systems 3.8 verfügt der ode-Löser weiterhin über eine adaptive Zeitschrittsteuerung.

**Vorteile der Erfindung**

Zur parallelen Verifizierung der Vorteile, neben einigen experimentellen Untersuchungen, worden nachfolgende Berechnungen mit geeigneten Verfahren berechnet.

Im Folgenden wird das Ergebnis einer Parameterstudie für die Strömungs- und Strukturgrößen dargestellt. Dazu wurden ihre Einflüsse auf den Auftriebsbeiwert $cL$ betrachtet. Ziel der passiven Wölbungsänderung ist es, die Schwankungen des Auftriebs aufgrund von Anstellwinkeländerungen zu reduzieren. Für die Bewertung der Ergebnisse wird daher das Verhältnis aus der Differenz des maximalen Beiwertes und des minimalen Beiwertes des elastischen Profils zur Differenz eben jener Beiwerte des starren Profils bestimmt::

$$\frac{\left( c_{L,max} - c_{L,min} \right)_{elastisch}}{\left( c_{L,max} - c_{L,min} \right)_{starr}} \qquad (4.1)$$

Daran lässt sich die Reduzierung direkt ablesen und wird tabellarisch angegeben.

Die Anstellwinkeländerung wird in diesem Kapitel als Sinusschwingung um einen Ausgangsanstellwinkel angenommen. Damit kommt es sowohl zur Ent- als auch Zuwölbung des Profils. Berechnet wird immer eine Periode, über der das Verhalten des Auftriebsbeiwertes $c_L$ gezeigt wird. Die eingestellten Parameter und verwendeten Profile sind in den Bildunterschriften aufgeführt. Die Profiltiefe beträgt in allen Berechnungen c = 0,3m. Darüber hinaus enthalten die Tabellen die jeweiligen maximalen und minimalen KlappenwinkeL Alle aeroelastischen Simulationen sind mit dem stationären Panelverfahren durchgeführt. Es ist zu beachten, dass bei Aufbringen der aerodynamischen Lasten eine Wölbungsänderung beim elastischen Profil erfolgt. Um das zu kompensieren, wird ein Vorspannmoment aufgebracht. Die Größe richtet sich nach dem stationären aerodynamischen Klappenmoment im Auslegungspunkt.

Die Diagramme in Bild 4.1 zeigen den Einfluss der Drehsteifigkeiten. Wie erwartet nimmt mit steigender Steifigkeit die Reduzierung der Amplituden ab, siehe Tabelle 4.1. Zu beachten ist, dass bei zu klein werdender Steifigkeit, im vorliegenden Beispiel zwischen $k_r$ = 50Nm/rad und $k_r$ = 100Nm/rad, die Wölbungsänderung so groß wird, dass ein Vorzeichenwechsel im Gradienten $\frac{\delta c_L}{\delta a}$ stattfindet. Das führt bei der Drehsteifigkeit $k_r$ = 10Nm/rad dazu, dass die Amplituden wieder zunehmen. Eine maximale Reduzierung ist daher mit einer Steifigkeit zwischen $k_r$ = 50Nm/rad und $k_r$ = 100Nm/rad zu erwarten. Mit einer Steifigkeit von $k_r$ = 50Nm/rad, wird eine Reduzierung von 89,7% erzielt.

Tabelle 4.1.: Differenz Auftriebsbeiwert und minimale bzw. maximale Klappenausschläge bei Variation der Federsteifigkeit

| Federsteifigkeit [Nm/rad] | $\frac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 10 | 0,444 | 55,6 | 3,48 | -3,81 | 10,43 | -11,43 |
| 50 | 0,103 | 89,7 | 2,65 | -2,78 | 7,94 | -8,35 |
| 100 | 0,196 | 80,4 | 2,03 | -2,11 | 6,08 | -6,33 |
| 150 | 0,345 | 65,5 | 1,65 | -1,70 | 4,94 | -5,11 |
| 200 | 0,450 | 55,0 | 1,38 | -1,43 | 4,13 | -4,30 |
| 500 | 0,720 | 28,0 | 0,69 | -0,74 | 2,08 | -2,21 |

Bild 4.1.: Einfluss der Steifigkeit $k_\gamma$ auf den Auftriebsbeiwert $c_L$; NACA $64_3618$; $V_\infty = 60\frac{m}{s}$; $a(t) = 5° + 5° \sin(4t)$; $x_{le} = 0,2$; $x_{te} = 0,7$; $d_\beta = 1\frac{Nms}{rad}$; $i = 3$

In Bild 4.2 ist der Einfluss der Dämpfung dargestellt. Mit zunehmender Dämpfungskonstante werden die Klappenausschläge kleiner und die Reduzierung der Amplituden nimmt ab, siehe Tabelle 4.2. Des Weiteren ist bei steigender Dämpfungskonstante eine Phasenverschiebung des Auftriebsbeiwertes $c_L$ des elastischen Profils gegenüber dem starren Profil zu beobachten. Aus diesem Grund ist in Bild 4.2b die Klappenauslenkung an der Hinterkante für $d_\beta = 5\frac{Nms}{rad}$ dargestellt (strichpunktierte Linie). Die Auslenkungen sind ebenfalls phasenverschoben jedoch verzögert. Es ist davon auszugehen, dass aufgrund der Verzögerung die Umströmung des Profils derart beeinflusst wird, dass sich bei zunehmender Dämpfung der maximale Auftriebsbeiwert vorzeitig erreicht wird. Dieser Zusammenhang kann jedoch im Rahmen dieser Arbeit nicht abschließend geklärt werden.

Bild 4.2.: Einfluss der Dämpfung $d_\beta$ auf den Auftriebsbeiwert $c_L$; NACA $64_3618$; $V_\infty = 60\frac{m}{s}$; $\alpha(t) = 5° + 5° \sin(4t)$; $x_{le} = 0,2$; $x_{te} = 0,7$; $k_\gamma = 100\frac{Nm}{rad}$; $i = 3$

Tabelle 4.2.: Differenz Auftriebsbeiwert und minimale bzw. maximale Klappenausschläge bei Variation der Dämpfungskonstante

| Dämpfungskonstante [Ns/m] | $\dfrac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 0,1 | 0,188 | 81,2 | 2,03 | -2,11 | 6,09 | -6,34 |
| 0,5 | 0,190 | 81,0 | 2,03 | -2,11 | 6,09 | -6,34 |
| 1 | 0,196 | 80,4 | 2,03 | -2,11 | 6,08 | -6,33 |
| 3 | 0,249 | 75,1 | 2,00 | -2,08 | 6,01 | -6,25 |
| 5 | 0,328 | 77,2 | 1,96 | -2,03 | 5,87 | -6,09 |
| 10 | 0.521 | 47.9 | 1.79 | -1.84 | 5.38 | -5.51 |

Bild 4.3 zeigt die $c_L$-Verläufe bei Variation der Übersetzung. Mit zunehmender Übersetzung wird die Reduzierung der Amplituden größer. Ab einem Übersetzungsverhältnis von i = 7 ist wieder ein Umschlagspunkt, wie es auch bei der Steifigkeit der Fall ist, zu sehen. An den Klappenausschlägen in Tabelle 4.3 ist festzustellen, dass sich das Profil zu stark zu- bzw. entwölbt. Des Weiteren geht aus den Daten hervor, dass die größtmögliche Reduzierung mit einer Übersetzung von $i$ = 5 erzielt wird. Dieser beträgt 92,2%. Mit steigender Übersetzung ist eine Phasenverschiebung zu erkennen. Dies ist darin begründet, dass die Dämpfungskraft sich aus der Klappengeschwindigkeit, die wiederum von dem Übersetzungsverhältnis abhängt. Vergleicht man diesen Zusammenhang mit den Ergebnissen aus Bild 4.2b so lässt sich die unterschiedliche Phasenverschiebung mit den höheren Klappenausschlägen bei zunehmender Übersetzung erklären.

**Bild 4.3.:** Einfluss der Übersetzung $i$ auf den Auftriebsbeiwert $c_L$; NACA $64_3618$; $V_\infty = 60\frac{m}{s}$; $\alpha(t) = 5° + 5° \sin(4t)$; $x_{le} = 0,2$; $x_{te} = 0,7$; $k_\gamma = 100\frac{Nm}{rad}$; $d_\beta = 1\frac{Nms}{rad}$

Tabelle 4.3.: Differenz Auftriebsbeiwert und minimale bzw. maximale Klappenausschläge bei Variation der Übersetzung

| Übersetzung [-] | $\dfrac{\left(c_{Lmax}-c_{Lmin}\right)_{elastisch}}{\left(c_{Lmax}-c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 1 | 0,551 | 44,9 | 3,53 | -3,54 | 3,53 | -3,54 |
| 2 | 0,326 | 67,4 | 2,57 | -2,64 | 5,15 | -5,28 |
| 3 | 0,196 | 80,4 | 2,03 | -2,11 | 6,08 | -6,33 |
| 5 | 0,078 | 92,2 | 1,43 | -1,51 | 7,16 | -7,53 |
| 7 | 0,093 | 90,7 | 1,10 | -1,17 | 7,73 | -8,21 |
| 9 | 0,134 | 86,6 | 0,90 | -0,96 | 8,09 | -8,65 |

Das in den bisherigen Simulationen angenommene Trägheitsmoment basiert auf dem Gewicht einer Im langen Klappe. Diese besteht aus einer Glasfaseroberfläche mit Styroporkern. Die Trägheitsmomente der Vorderkanten- und Hinterkantenklappe betragen:

$$\theta_{l,Gl} = 3,425 \cdot 10^{-4} kgm^2$$

$$\theta_{t,Gl} = 3,447 \cdot 10^{-4} kgm^2$$

Zum Vergleich soll das Trägheitsmoment einer Aluminiumklappe mit einer Wandstärke von 3mm betrachtet werden. Daraus ergeben sich die Trägheitsmomente:

$$\theta_{l,Al} = 19,837 \cdot 10^{-4} kgm^2$$

$$\theta_{t,Al} = 25,423 \cdot 10^{-4} kgm^2$$

Die Ergebnisse sind in Bild 4.4 und Tabelle 4.4 dargestellt. Trägheitsmomente in dieser Größenordnung haben keinen Einfluss auf das Auftriebsverhalten und die Klappenausschläge.

**Bild 4.4.:** Einfluss der Trägheitsmomente $\theta_l$ und $\theta_t$ auf den Auftriebsbeiwert $c_L$; NACA $64_3618$; $V_\infty = 60\frac{m}{s}$; $\alpha(t) = 5° + 5° \sin(4t)$; $x_{le} = 0,2$; $x_{te} = 0,7$; $k_\gamma = 100\frac{Nm}{rad}$; $d_\beta = 1\frac{Nms}{rad}$; $i = 3$

Tabelle 4.4.: Differenz Auftriebsbeiwert und minimale bzw. maximale Klappenausschläge bei Variation des Trägheitsmoments

| Material [-] | $\frac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| Glasfaser | 0,195 | 80,5 | 2,03 | -2,11 | 6,09 | -6,34 |
| Aluminium | 0,196 | 80,4 | 2,03 | -2,11 | 6,08 | -6,33 |

In Bild 4.5 sind die Verläufe des Auftriebs bei Variation der Klappenlängen dargestellt. Dabei wird immer die Länge der Hinterkantenklappe konstant gehalten. Untersucht werden neun Konfigurationen mit Klappenlängen von jeweils 10%, 20% und 30% der Profiltiefe. Den Diagrammen ist zu entnehmen, dass die Amplituden mit größer werdender Vorderkantenklappe mehr reduziert werden. Das ergibt sich daraus, dass ein größeres Moment an der Vorderkante erzeugt wird und somit die Klappenauslenkungen größer werden. Tabelle 4.5 ist zu entnehmen, dass die Änderung der Hinterkantenklappe weniger Einfluss auf die Amplitudenreduzierung hat als die Vorderkantenklappe. Im Fall einer Vorderkantenklappe von 30% ist die Reduzierung für alle Hinterkantenklappenlängen nahezu gleich. Für die Fälle $x_{le}$ = 10% und $x_{le}$ = 20% ist jedoch ein Anstieg der Reduzierung mit größer werdender Hinterkantenklappe zu erkennen. Des Weiteren wieder ein Umschlag festzustellen. Bei zu großer Klappenlänge der Vorderkante verursacht das aerodynamische Moment eine zu große Zu- bzw. Entwölbung, wie es auch bei der Steifigkeit zu sehen ist. Der Umschlagspunkt liegt zwischen 20% und 30% Vorderkantenklappe.

**(a)** Variation der Vorderkantenklappe; $x_{te} = 0,7$

**(b)** Variation der Hinterkantenklappe; $x_{te} = 0,8$

**(c)** Variation der Hinterkantenklappe; $x_{te} = 0,9$

**Bild 4.5.:** Einfluss der Klappenlängen auf den Auftriebsbeiwert $c_L$; NACA $64_3618$; $V_\infty = 60\frac{m}{s}$; $\alpha(t) = 5° + 5° \sin(4t)$; $k_\gamma = 100\frac{Nm}{rad}$; $d_\beta = 1\frac{Nms}{rad}$; $i = 3$

Tabellen 4.5.: Differenz Auftriebsbeiwert und minimale bzw. maximale Klappenausschläge bei Variation der Klappenlängen

| Klappenlänge [-] | $\dfrac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| $x_{le} = 0,1$ | | | | | | |
| $x_{te} = 0,7$ | 0,608 | 39,2 | 0,39 | -0,41 | 1,16 | -1,23 |
| $x_{te} = 0,8$ | 0,682 | 31,8 | 0,38 | -0,4 | 1,13 | -1,21 |
| $x_{te} = 0,9$ | 0,762 | 23,8 | 0,39 | -0,42 | 1,17 | -1,27 |
| $x_{te} = 0,2$ | | | | | | |
| $x_{te} = 0,7$ | 0,215 | 78,5 | 0,82 | -0,84 | 2,45 | -2,52 |
| $x_{te} = 0,8$ | 0,242 | 75,8 | 0,94 | -0,96 | 2,82 | -2,88 |
| $x_{te} = 0,9$ | 0,350 | 65,0 | 1,14 | -1,15 | 3,42 | -3,46 |
| $x_{le} = 0,3$ | | | | | | |

(fortgesetzt)

| Klappenlänge [-] | $\dfrac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| $x_{te}$ = 0,7 | 0,081 | 91,9 | 1,09 | -1,11 | 3,26 | -3,34 |
| $x_{te}$ = 0,8 | 0,088 | 91,2 | 1,32 | -1,34 | 3,97 | -4,01 |
| $x_{te}$ = 0,9 | 0,089 | 91,1 | 1,74 | -1,73 | 5,22 | -5,19 |

Der Einfluss der Profildicke wird anhand von symmetrischen Profilen aus der vierstelligen NACA-Serie untersucht. Bild 4.6 zeigt die $c_L$-Verläufe für vier verschiedene Profile. An den $c_L$-Verläufen der starren Profile ist zu erkennen, dass die Amplituden der $c_L$-Verläufe und somit auch der Klappenmomente, mit zunehmender Profildicke größer werden. Die Klappenausschläge nehmen jedoch unwesentlich zu, wie Tabelle 4.6 zu entnehmen ist. Daraus lässt sich schließen, dass die Klappenausschläge mit zunehmender Profildicke einen größeren Einfluss auf die Umströmung des Profils haben. Die Reduzierung der Amplituden steigt wesentlich mehr als die Klappenausschläge. Für das NACA 0060 wird eine Reduzierung von 94,9% erreicht.

Tabelle 4.6.: Differenz Auftriebsbeiwert und minimale bzw. maximale Klappenausschläge bei Variation der Profildicke

| NACA | $\dfrac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 0005 | 0,173 | 82,7 | 0,86 | -0,86 | 2,58 | -2,58 |
| 0015 | 0,165 | 83,5 | 0,85 | -0,85 | 2,55 | -2,56 |
| 0030 | 0,128 | 87,2 | 0,87 | -0,87 | 2,61 | -2,61 |
| 0040 | 0,094 | 90,6 | 0,91 | -0,89 | 2,73 | -2,67 |
| 0050 | 0,067 | 93,3 | 0,92 | -0,90 | 2,77 | -2,71 |
| 0060 | 0,051 | 94,9 | 0,93 | -0,92 | 2,79 | -2,75 |

**(a)** NACA 0005

**(b)** NACA 0030

**(c)** NACA 0050

**(d)** NACA 0060

**Bild 4.6.:** Einfluss der Profildicke auf den Auftriebsbeiwert $c_L$; $V_\infty = 60\frac{m}{s}$; $\alpha(t) = 5° + 2° \sin(4t)$; $x_{le} = 0,2$ $x_{te} = 0,7$ $k_\gamma = 100\frac{Nm}{rad}$; $d_\beta = 1\frac{Nms}{rad}$; $i = 3$

Des Weiteren wurde die Profilwölbung an einem vierstelligen NACA Profil variiert. Die Profildicke beträgt 10% und die Rücklage der Wölbung liegt bei 50% der Profiltiefe. Die Ergebnisse sind in Bild 4.7 gezeigt. Die dazugehörigen Reduzierungen und Klappenauslenkungen sind in Tabelle 4.7 gegeben. Es ist zu erkennen, dass der Einfluss der Profilwölbung von untergeordneter Bedeutung ist.

**Bild 4.7.: Einfluss der Profilwölbung auf den Auftriebsbeiwert** $c_L$; $V_\infty = 60\frac{m}{s}$; $\alpha(t) = 5° + 2° \sin(4t)$; $x_{le} = 0,2$ $x_{te} = 0,7$ $k_\gamma = 100\frac{Nm}{rad}$; $d_\beta = 1\frac{Nms}{rad}$; $i = 3$

Tabelle 4.7.: Differenz Auftriebsbeiwert und minimale bzw. maximale Klappenausschläge bei Variation der Profilwölbung

| NACA | $\dfrac{\left(c_{Lmax} - c_{Lmin}\right)_{elastisch}}{\left(c_{Lmax} - c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 0010 | 0,173 | 82,7 | 0,85 | -0,85 | 2,55 | -2,56 |
| 2510 | 0,181 | 81,9 | 0,84 | -0,85 | 2,52 | -2,54 |
| 4510 | 0,190 | 81,0 | 0,83 | -0,84 | 2,49 | -2,53 |
| 6510 | 0,194 | 80,6 | 0,82 | -0,84 | 2,47 | -2,52 |

Der Einfluss der Anströmgeschwindigkeit auf den $c_L$-Verlauf ist in Bild 4.8 zu sehen. Wie erwartet nimmt die Reduzierung mit steigender Anströmgeschwindigkeit zu, welches in der Zunahme der Momente begründet ist. Die Geschwindigkeit geht quadratisch in die Strämungskräfte ein. Auch hier ist wieder ein Umschlag festzustellen. Unter Beachtung der in Tabelle 4.8 aufgeführten Ergebnisse, kann für den Umschlagspunkt eine Anströmgeschwindigkeit zwischen $V\infty = 60m/s$ und $V\infty = 80m/s$ angenommen werden. Die größte Reduzierung der Amplituden wird bei $V\infty =$

80m/s erreicht und beträgt 94,8%.

**Bild 4.8.**: Einfluss der Anströmgeschwindigkeit $V_\infty$ auf den Auftriebsbeiwert $c_L$; NACA $64_3618$; $\alpha(t) = 5^\circ + 5^\circ \sin(4t)$; $x_{le} = 0,2$; $x_{te} = 0,7$; $k_\gamma = 100\frac{\text{Nm}}{\text{rad}}$; $d_\beta = 1\frac{\text{Nms}}{\text{rad}}$; $i = 3$

Tabelle 4.8.: Differenz Auftriebsbeiwert und minimale bzw. maximale Klappenausschläge bei Variation der Anströmgeschwindigkeit

| Anströmgeschwindigkeit [m/s] | $\frac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 10 | 0,955 | 4,5 | 0,11 | -0,12 | 0,34 | -0,37 |
| 20 | 0,833 | 16,7 | 0,41 | -0,45 | 1,24 | -1,33 |
| 30 | 0,668 | 33,2 | 0,83 | -0,87 | 2,49 | -2,62 |
| 40 | 0,495 | 50,5 | 1,27 | -1,32 | 3,81 | -3,97 |
| 60 | 0,196 | 80,4 | 2,03 | -2,11 | 6,08 | -6,33 |
| 80 | 0,052 | 94,8 | 2,56 | -2,68 | 7,67 | -8,04 |

Die bisherigen Anstellwinkeländerungen wurden über eine Sinusschwingung beschrieben. Mit Blick auf eine Anwendung an Windkraftanlagen ist mit unregelmäßigen Anstellwinkeländerungen zu rechnen. Da bei einem passiven Konzept eine Anpassung der Parameter im Betrieb nicht möglich ist, werden Anstellwinkelverläufe der Form:

$$\alpha_1(t) = 5^\circ + 2^\circ \sin(0,5t)\cos(3t) \qquad (4.2)$$

$$\alpha_2(t) = 5^\circ + 3^\circ \sin(4t)\sin(0,2t)\cos(t) \qquad (4.3)$$

betrachtet. Die Ergebnisse werden in Bild 4.9 und 4.10 gezeigt. Die erreichten Reduzierungen können Tabelle 4.9 entnommen werden. Die mittlere Reduzierung der Amplitude beträgt im vorliegenden Fall 80%.

Bild 4.9.: Einfluss des Anstellwinkels auf den Auftriebsbeiwert $c_L$; NACA $64_3618$; $V_\infty = 60\frac{m}{s}$; $\alpha_1(t) = 5° + 2° \sin(0,5t)\cos(3t)$; $x_{le} = 0,2$; $x_{te} = 0,7$; $k_\gamma = 100\frac{Nm}{rad}$; $d_\beta = 1\frac{Nms}{rad}$; $i = 3$

Tabelle 4.9.: Differenz Auftriebsbeiwert und minimale bzw- maximale Klappenausschläge bei Variation des Anstellwinkels

| Anstellwinkel [°] | $\dfrac{\left(c_{Lmax}-c_{Lmin}\right)_{elastisch}}{\left(c_{Lmax}-c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| $\alpha_1(t)$ | 0,192 | 80,8 | 0,82 | -0,83 | 2,46 | -2,5 |
| $\alpha_2(t)$ | 0,192 | 80,8 | 1,05 | -1,08 | 3,16 | -3,23 |

Bild 4.10.: Einfluss des Anstellwinkels auf den Auftriebsbeiwert $c_L$; NACA $64_3618$; $V_\infty = 60\frac{m}{s}$; $\alpha_2(t) = 5° + 3° \sin(4t)\sin(0,2t)\cos(t)$; $x_{le} = 0,2$; $x_{te} = 0,7$; $k_\gamma = 100\frac{Nm}{rad}$; $d_\beta = 1\frac{Nms}{rad}$; $i = 3$

**Anwendungsbeispiel NREL 5MW RWT**

Im Folgenden werden die Ergebnisse einer berechneten Anwendung des der Erfindung zugrunde liegenden Konzeptes an einer virtuellen Referenz-Windturbine (RWT, 5MW Referenz Windturbine (RWT) von NREL) dargestellt.

Dabei wird angenommen, dass die Anstellwinkeländerung aus der atmosphärischen Grenzschicht resultiert. Die Anlage wird dann im oberen Bereich mit einer höheren Windgeschwindigkeit angeströmt, als im unteren. Die Windgeschwindigkeit $V_{Wid}$ kann über folgende Funktion beschrieben werden:

$$V_{wind}(r,\psi) = V_{hub} \frac{\ln\left(\frac{h_{hub} + r\cos\psi}{z_0}\right)}{\ln\left(\frac{h_{hub}}{z_0}\right)} \qquad (5.1)$$

dabei ist $V_{hub}$ die Windgeschwindigkeit auf Nabenhöhe, $\psi$ der Rotationswinkel des Flügels, r die radiale Position am Flügel und $z_0$ die Rauhigkeitslänge. Mit Hilfe der Blattelementtheorie kann die Anstellwinkelverteilung entlang des Flügels für jede Position des Rotors berechnet werden. Die in dieser Arbeit verwendeten Anstellwinkel sind von Ferber (2010) bestimmt, wobei instationäre Effekte des Nachlaufs, der Anströmung, sowie Blattschwingungen nicht berücksichtigt werden.

In diesem Kapitel werden drei radiale Positionen betrachtet. Der von NREL gegebenen diskreten Positionen folgend, werden diese mit RP12 ($\frac{r}{R} = 0,72$), RP14 ($\frac{r}{R} = 0,86$) und RP16 ($\frac{r}{R} = 0,96$) bezeichnet (R = Rotorblattlänge}. Für die Anwendung eines solchen Konzepts ist weniger der Vergleich zwischen den radialen Positionen von Bedeutung, da unterschiedliche Klappensysteme entlang des Flügels vorstellbar sind. Viel mehr interessiert das Verhalten bei unterschiedlichen Windgeschwindigkeiten auf Nabenhöhe. Für alle Rechnungen wurden eine Rauhigkeitslänge $z_0$ von 1m angenommen. Das Vorspannmoment der Vorderkantenklappe bestimmt sich aus dem Anstellwinkel des Rotors in vertikaler Richtung nach unten zeigend.

Für die einzelnen radialen Positionen werden unterschiedliche Steifigkeiten betrachtet. Mit Blick auf die zunehmenden Anströmgeschwindigkeitn im Außenbereich des Rotorblatts, ist mit einer zunehmenden Wölbungsänderung zu rechnen. Die wird durch die Ergebnisse in den Bildern 5.1 bis 5.3 bestätigt. Dabei ist insbesondere darauf zu achten, dass es bei kleiner werdender Steifigkeit oder größer werdender Geschwindigkeit zu keinem Umschlag kommt. Dies ist für einige der betrachteten Fälle eingetreten. Ein Umschlag bedeutet, dass der Rotor insgesamt weniger Leistung erbringt. Daraus ergibt sich direkt der Kompromiss, der mit einem passiven Konzept verbunden ist. Beispielsweise liegt die Reduzierung bei RP12 für die Geschwindigkeit $V_{hub}$ = 8m/s bei 89%, wenn eine Steifigkeit von $k_r$ = 50Nm/rad verwendet wird. Bei Anstieg der Geschwindigkeit auf 12m/s wird mit derselben Steifigkeit eine Lastminderung von 91,9% erzielt. In Bild 5.1b ist jedoch zu erkennen, dass diese Minderung bereits bei einem Umschlag zu niedrigen Auftriebsbeiwerten erfolgt. Dies gilt es zu verhindern. Somit wird die Reduzierung der Amplituden von den Betriebszuständen abhängen und eine Lastminderung von 60% bis 80% erreicht. Alle weiteren Werte können den Tabellen 5.1 bis 5.6 entnommen werden.

**(a)** $V_{Wind} = 8\mathrm{m/s}$        **(b)** $V_{Wind} = 12\mathrm{m/s}$

**Bild 5.1.:** NREL; Radiale Position $RP = 12$; NACA 64$_3$618; $x_{le} = 0,2$; $x_{te} = 0,7$; $d_\beta = 1\frac{\mathrm{Nm}}{\mathrm{s}}$; $i = 3$

Tabelle 5.1.: Differenz Auftriebsbeiwert und minimale bzw. maximale Klappenausschläge für NREL; $V_{Wind}$ = 8m/s; Radiale Position RP = 12; NACA 64$_3$618; $x_{le}$ = 0,2; $x_{te}$ = 0,7; $d_\beta = 1\frac{\mathrm{Nms}}{\mathrm{rad}}$; $i = 3$

| Federsteifigkeit [Nm/s] | $\dfrac{\left(c_{Lmax}-c_{Lmin}\right)_{elastisch}}{\left(c_{Lmax}-c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 50 | 0,110 | 89,0 | 1,05 | 0 | 3,16 | 0 |
| 100 | 0,376 | 62,4 | 0,74 | 0 | 2,21 | 0 |
| 150 | 0,520 | 48,0 | 0,57 | 0 | 1,70 | 0 |

Tabelle 5.2.: Differenz Auftriebsbeiwert und minimale bzw. maximale Klappenausschläge für NREL; $V_{Wind}$ = 12m/s; Radiale Position RP = 12; NACA 64$_3$618; $x_{le}$ = 0,2; $x_{te} = 0,7$; $d_\beta = 1\frac{\mathrm{Nms}}{\mathrm{rad}}$; $i = 3$

| Federsteifigkeit [Nm/rad] | $\dfrac{\left(c_{Lmax}-c_{Lmin}\right)_{elastisch}}{\left(c_{Lmax}-c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 50 | 0,081 | 91,9 | 1,37 | 0 | 4,12 | 0 |
| 100 | 0,177 | 82,3 | 1,05 | 0 | 3,16 | 0 |
| 150 | 0,334 | 66,6 | 0,85 | 0 | 2, 56 | 0 |

(a) $V_{Wind} = 8m/s$    (b) $V_{Wind} = 12m/s$

Bild 5.2.: NREL; Radiale Position $RP = 14$; NACA $64_3618$; $x_{le} = 0,2$; $x_{te} = 0,7$; $d_\beta = 1\frac{Nms}{rad}$; $i = 3$

Tabelle 5.3.: Differenz Auftriebsbeiwert und minimale bzw. maximale Klappenausschläge für NREL; $V_{Wind} =$ 8m/s; Radiale Position RP = 14; NACA $64_3618$; $x_{le} = 0,2$; $x_{te} = 0,7$; $d_\beta = 1\frac{Nm}{s}$; $i = 3$

| Federsteifigkeit [Nm/rad] | $\dfrac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{max}$ [°] |
|---|---|---|---|---|---|---|
| 50 | 0,023 | 93,7 | 1,30 | 0 | 3,89 | 0 |
| 100 | 0,254 | 74,6 | 0,96 | 0 | 2,88 | 0 |
| 150 | 0,409 | 59,1 | 0,76 | 0 | 2,29 | 0 |

Tabelle 5.4.: Differenz Auftriebsbeiwert und minimale bzw. maximale Klappenausschläge für NREL; $V_{Wind} =$ 12m/s; Radiale Position $RP = 14$; NACA $64_3618$; $x_{le} = 0,2$; $x_{te} = 0,7$; $d_\beta = 1\frac{Nms}{rad}$; $i = 3$

| Federsteifigkeit [Nm/rad] | $\dfrac{(c_{Lmax}-c_{Lmin})_{elastisch}}{(c_{Lmax}-c_{Lmin})_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 50 | 0,169 | 83,1 | 1,60 | 0 | 4,81 | 0 |
| 100 | 0,062 | 93,8 | 1,29 | 0 | 3,88 | 0 |
| 150 | 0,214 | 78,6 | 1,08 | 0 | 3,25 | 0 |

**(a)** $V_{Wind} = 8\text{m/s}$   **(b)** $V_{Wind} = 12\text{m/s}$

**Bild 5.3.:** NREL; Radiale Position $RP = 16$; NACA 64$_3$618; $x_{le} = 0,2$; $x_{te} = 0,7$; $d_\beta = 1\frac{\text{Nms}}{\text{rad}}$; $i = 3$

Tabelle 5.5.: Differenz Auftriebsbeiwert und minimale bzw. maximale Klappenausschläge für NREL; $V_{wind}$ = 8m/s; Radiale Position $RP$ = 16; NACA 64$_3$618; $x_{le}$ = 0, 2; $x_{te}$ = 0,7; $d_\beta = 1\frac{\text{Nm}}{\text{s}}$; $i$ = 3

| Federsteifigkeit [Nm/rad] | $\frac{\left(c_{Lmax}-c_{Lmin}\right)_{elastisch}}{\left(c_{Lmax}-c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 50 | 0,082 | 91,8 | 1,38 | 0 | 4,14 | 0 |
| 100 | 0,173 | 82,7 | 1,06 | 0 | 3,18 | 0 |
| 150 | 0,330 | 67,0 | 0,86 | 0 | 2,58 | 0 |

Tabelle 5.6.: Differenz Auftriebsbeiwert und minimale bzw. maximale Klappenausschläge für NREL; $V_{wind}$ = 12m/s; Radiale Position $RP$ = 16; NACA 64$_3$618; $x_{le}$ = 0,2; $x_{te}$ = 0,7; $d_\beta = 1\frac{\text{Nms}}{\text{rad}}$; $i$ = 3

| Federsteifigkeit [Nm/rad] | $\frac{\left(c_{Lmax}-c_{Lmin}\right)_{elastisch}}{\left(c_{Lmax}-c_{Lmin}\right)_{starr}}$ | Reduzierung [%] | $\gamma_{max}$ [°] | $\gamma_{min}$ [°] | $\beta_{max}$ [°] | $\beta_{min}$ [°] |
|---|---|---|---|---|---|---|
| 50 | 0,220 | 88,0 | 1,71 | 0 | 5,12 | 0 |
| 100 | 0,019 | 98,1 | 1,42 | 0 | 4,26 | 0 |
| 150 | 0,135 | 86,5 | 1,21 | 0 | 3,64 | 0 |

Aufgrund dieser und einiger weiterer Untersuchungen, ergeben sich ganz besonders bevorzugte Ausführungsbeispiele für die im Folgenden dargestellten Parameterbereiche oder Relationen von Parametern:

- Die größten Einflüsse auf den Auftriebsbeiwert haben die Steifigkeit, das Übersetzungsverhältnis sowie die Klappenlängen. Mit sinkender Steifigkeit nimmt die erreichte Amplitudenreduzierung zu. Für das Übersetzungsverhältnis hat sich gezeigt, dass ab einem Verhältnis von $i$ = 5 keine signifikante Verbesserung mehr erreicht wird. Hinsichtlich der Klappenlängen lässt sich sagen, dass die Variation der Vorderkantenklappe einen höheren Einfluss hat als die Änderung der Hinterkantenklappe. Die Profilwölbung spielt bei der Reduzierung der Lasten keine Rolle. Hier werden mit unterschiedlichen Profilwölbungen dieselben Ergebnisse erzielt. Demgegenüber können mit zunehmender Profildicke die Amplituden der Lasten, bei gleich bleibenden Klappenausschlägen, gesenkt werden.

- Für alle Betrachtungen ist zu berücksichtigen, dass es einen Punkt gibt in dem ein Umschlag des Auftriebsbeiwerts auftritt, der durch einen Vorzeichenwechsel

$$\frac{\delta c_L}{\delta q}$$

bestimmt ist. Dieser Umschlag ist insbesondere bei der Anwendung an Windkraftanlagen zu vermeiden. Der mittlere Auftriebsbeiwert nimmt durch den Umschlag ab, wodurch der Ertrag der Windkraftanlage sinkt. Dies gilt es im Hinblick auf die Effizienz der Gesamtanlage zu berücksichtigen.

- Mit zunehmender Anströmgeschwindigkeit erhöhen sich die Klappenausschläge und infolgedessen die Reduzierung des Auftriebsbeiwerts. Zur Vermeidung des oben erwähnten Umschlag im $cL$-Verlauf muss die Dimensionierung der Federsteifigkeit auf die die Anströmgeschwindigkeit im Auslegungspunkt angepasst werden.

### Weitere Ausführungsbeispiele

Ausführungsbeispiel 1: Die Kinematik zur starren Kopplung kann unterschiedlich ausgeführt werden. In einfachsten Fall besteht sie aus einem Kurbeltrieb. Der Kurbeltrieb ist schematisch in der Fig. 1 und Bild 2.7b dargestellt. Die fest mit jeweils einer Klappe fest verbundenen Ruderhörner der Länge L1 und L2 werden mit der Kurbelstange L verbunden. Wobei jeweils ein Ruderhorn nach oben (unten) und das andere nach unten (oben) angebracht wird, damit eine Klappe im Uhrzeigersinn und die andere Klappe sich gleichzeitig im Gegenuhrzeigersinn drehen.

In einem weiteren Ausführungsbeispiel hat die Getriebeübersetzungen (L1/L2) einen Wert von 2 bis 3.

In einem weiteren Ausführungsbeispiel ist die Länge der Vorderkantenklappe 15% bis 20% der Profiltiefe und die Länge der Hinterkantenklappe 20% bis 30% der Profiltiefe.

In einem weiteren Ausführungsbeispiel ist an der Kurbel der Vorderkantenklappe eine Feder angebracht. Diese ermöglicht die Einstellung des Arbeitsbereiches des Systems, indem die Vorspannkraft der Feder den auf die Vorderkante wirkenden Strömungskräften überlagert wird. Das Verhältnis der Vorspannkraft zum Drehwinkel wird über die Wahl der Federsteifigkeit definiert.

In einem weiteren Ausführungsbeispiel wird an der Kurbel der Hinterkante ein Dämpfer angebracht der das System stabilisiert.

In einem weiteren Ausführungsbeispiel sind mechanischen Anschläge an den Kanten und / oder Klappen, mit denen die Drehbewegung auf bestimmte Winkel begrenzt ist, wodurch der Arbeitsbereich des Systems ebenfalls begrenzt werden kann.

In einem weiteren Ausführungsbeispiel sind die oben genannten Ausführungsbeispiele kombiniert: die kinematische Kopplung ist als Kurbeltrieb mit einer Kurbelstange ausgeführt, die Getriebeübersetzung liegt zwischen 2 und 3, die Länge der Vorderkantenklappe beträgt zwischen 15% und 20%, die der Hinterkantenklappe zwischen 20% und 30 %, an der Kurbel der Hinterkantenklappe ist ein Dämpfer angebracht und die Drehbewegung der Klappen wird mittels Dämpfer begrenzt.

In einem weiteren Ausführungsbeispiel ist die Länge des Kurbeltriebs veränderbar. Diese Änderung wird manuell oder aktiv durch Regelung und Steuerung vorgenommen. In einem weiteren Ausführungsbeispiel ist die Länge des Ruderhorns an der Hinterkante veränderbar. Diese Änderung wird manuell oder aktiv durch Regelung und Steuerung vorgenommen.

In einem weiteren Ausführungsbeispiel ist die Länge des Ruderhorns an der Vorderkante veränderbar. Diese Änderung wird manuell oder aktiv durch Regelung und Steuerung vorgenommen.

In einem weiteren Ausführungsbeispiel sind die Länge des Ruderhorns an der Vorderkante, die Länge des Ruderhorns an der Hinterkante und die Länge des Kurbeltriebs veränderbar. Diese Änderungen werden manuell oder aktiv durch Regelung und Steuerung vorgenommen.

Die Ruderhörner und / oder der Kurbeltrieb sind dazu als Getriebe ausgelegt, insbesondere als Linearantriebe.

### Patentansprüche

1. Rotorblatt, aufweisend eine aerodynamisches Profil mit einer Vorder-und einer Hinterkante, wobei das Profil zur Ausbildung eines Auftriebs durch Druckunterschiede zwischen einer Saug-und Druckseite des Profils bei über das Rotorblatt strömender Luft ausgeführt ist, wobei das Rotorblatt Mittel zur Änderung der Wölbung aufweist, wobei diese Mittel zum einen an der Vorderkante und zum anderen an der Hinterkante angeordnet sind und passiv, d.h. nicht durch, abgesehen von der anströmenden Luft, äußere Energiezufuhr miteinander gekoppelt ausgeführt sind, **dadurch gekennzeichnet, dass** an der Vorderkante eine Feder vorgesehen ist zur Einstellung des Arbeitsbereiches des Systems.

2. Rotorblatt nach Anspruch 1, **dadurch gekennzeichnet, dass** die Mittel aus je einem an der Vorderkante und einem an der Hinterkante elastisch ausgeführtem und/oder drehbar gelagertem Element bestehen.

3. Rotorblatt nach einem der Ansprüche 1 bis 2, **dadurch gekennzeichnet, dass** das Rotorblatt in seiner Steifigkeit veränderlich ausgeführt ist und/oder die Kopplung in ihrer Stärke veränderlich ausgeführt ist und/oder die Kopplung über eine veränderliche Dämpfung verfügt.

4. Windkraftanlage mit mindestens einem Rotorblatt nach einem der Ansprüche 1 bis 3.

5. Windkraftanlage nach Anspruch 4, **dadurch gekennzeichnet, dass** sie eine Regelung oder Steuerung aufweist, welche in Abhängigkeit von den gemessenen Strömungsverhältnissen den Betrag oder die Ausrichtung der Steifigkeit des Rotorblattes oder/und die Stärke der, nach der Änderung durch Regelung oder Steuerung, wieder passiven Kopplung verändert und / oder die Dämpfung an der Hinterkante verändert.

6. Windkraftanlage mit mindestens einem Rotorblatt nach einem der Ansprüche 1 bis 5 zur Böenlastminderung.

7. Rotorblatt nach einem der Ansprüche 1 bis 6, **dadurch gekennzeichnet, dass** die Vorder-und Hinterkante durch einen Kurbeltrieb miteinander gekoppelt ausgeführt sind.

8. Rotorblatt nach einem der Ansprüche 1 bis 7, **dadurch gekennzeichnet, dass** die Vorder-und Hinterkante durch eine Kurbelstange miteinander gekoppelt ausgeführt sind.

9. Rotorblatt nach einem der Ansprüche 1 bis 8, **dadurch gekennzeichnet, dass** an der Vorderkante eine vorgespannte Feder vorgesehen ist.

10. Rotorblatt nach einem der Ansprüche 1 bis 9, **dadurch gekennzeichnet, dass** mechanische Anschläge an der Vorder-und/oder Hinterkante vorgesehen sind zur Begrenzung der Drehbewegung

11. Rotorblatt nach einem der Ansprüche 1 bis 10, **dadurch gekennzeichnet, dass** an der Hinterkante ein Dämpfer vorgesehen ist.

12. Rotorblatt nach einem der Ansprüche 1 bis 11, **dadurch gekennzeichnet, dass** an der Hinterkante ein Dämpfer in Form eines Federelementes mit nicht-linearer Federkennlinie vorgesehen ist.

13. Rotorblatt nach einem der Ansprüche 1 bis 12, **dadurch gekennzeichnet, dass** die Vorder-und Hinterkante durch eine Kurbelstange miteinander gekoppelt ausgeführt sind, wobei ein Ruderhorn nach oben und das andere Ruderhorn nach unten gerichtet ausgeführt ist.

14. Rotorblatt nach einem der Ansprüche 1 bis 13, **dadurch gekennzeichnet, dass** die Vorder-und Hinterkante durch eine Kurbelstange miteinander gekoppelt ausgeführt sind, wobei eine Kante sich im Uhrzeigersinn und die andere Kante sich gleichzeitig im Gegenuhrzeigersinn dreht.

15. Rotorblatt nach einem der Ansprüche 1 bis 14, **dadurch gekennzeichnet, dass** die Kopplung so ausgeführt ist, dass durch die Druckänderung an der Vorderkante diese gedreht wird und durch die Kopplung mit der Hinterkante diese simultan gedreht wird.

16. Rotorblatt nach einem der Ansprüche 1 bis 15, **dadurch gekennzeichnet, dass** die Kopplung so ausgeführt ist, dass durch die Druckänderung an der Hinterkante diese gedreht wird und durch die Kopplung mit der Vorderkante diese simultan gedreht wird.

17. Rotorblatt nach einem der Ansprüche 1 bis 16, **dadurch gekennzeichnet, dass** die Elemente zur Kopplung, Dämpfung und/oder der mindestens eine Anschlag auf dem Achsbereich für die Lagerung der auslenkbaren Kanten und/oder Klappen liegt.

18. Rotorblatt nach einem der Ansprüche 1 bis 16, **dadurch gekennzeichnet, dass** die Elemente zur Kopplung und/oder Dämpfung und/oder der mindestens eine Anschlag außerhalb der Achsbereiche für die Lagerung der auslenkbaren Kanten und/oder Klappen liegt.

19. Rotorblatt nach einem der Ansprüche 1 bis 18, **dadurch gekennzeichnet, dass** die Länge des Kurbeltriebs und / oder die Länge des Ruderhorns an der Vorderkante und/oder die Länge des Ruderhorns an der Hinterkante veränderbar ist / sind.

**Claims**

1. A rotor blade comprising an aerodynamic profile with a leading and a trailing edge, wherein the profile is configured to create a lift due to pressure differences between a suction and a pressure side of the profile when air flows over the rotor blade, wherein the rotor blade comprises means for the modification of the camber, the means being arranged, on the one hand, on the leading edge and, on the other, on the trailing edge and being configured in a manner passively coupled to each other, i.e. not via an external energy supply apart from the streaming air, **characterized in that** a spring is provided on the leading edge to adjust a working area of the system.

2. The rotor blade according to claim 1, **characterized in that** the means consist, respectively, of an element arranged in an elastic and/or rotatably mounted manner on the leading edge and an element arranged in an elastic and/or rotatably mounted manner on the trailing edge.

3. The rotor blade according to any of claims 1 or 2, **characterized in that** the rotor blade is arranged in a manner enabling the modification of its stiffness and/or the strength of the coupling and/or the coupling comprises a modifiable damping.

4. A wind turbine generator comprising at least one rotor blade according to any of claims 1 to 3.

5. The wind turbine generator according to claim 4, **characterized in that** the wind turbine generator comprises a regulation or control for modifying, depending on the measured flow conditions, the amount or the direction of the stiffness of the rotor blade, and/or the strength of the coupling, which is once again passive after the modification executed by the regulation or control, and/or for modifying the damping on the trailing edge.

6. A wind turbine generator comprising at least one rotor blade according to any of claims 1 to 5 for the reduction of gust loads.

7. The rotor blade according to any of claims 1 to 6, **characterized in that** the leading and trailing edge are coupled to one another via a crank drive.

8. The rotor blade according to any of claims 1 to 7, **characterized in that** the leading and trailing edge configured to be are coupled to one another via a crank rod.

9. The rotor blade according to any of claims 1 to 8, **characterized in that** a prestressed spring is provided on the leading edge.

10. The rotor blade according to any of claims 1 to 9, **characterized in that** mechanical stops are provided on the leading and/or trailing edge for limiting the rotary movement.

11. The rotor blade according to any of claims 1 to 10, **characterized in that** a damper is provided on the trailing edge.

12. The rotor blade according to any of claims 1 to 11, **characterized in that** a damper in the form of a spring element with a non-linear characteristic spring curve is provided on the trailing edge.

13. The rotor blade according to any of claims 1 to 12, **characterized in that** the leading and trailing edge are coupled to one another via a crank rod, whereby a control horn is arranged pointing upwards and the other control horn is arranged pointing downwards.

14. The rotor blade according to any of claims 1 to 13, **characterized in that** the leading and trailing edge are coupled to one another via a crank rod, whereby one edge rotates clockwise and the other edge simultaneously rotates anticlockwise.

**15.** The rotor blade according to any of claims 1 to 14, **characterized in that** the coupling is arranged such that the leading edge is rotated due to a pressure change, and due to the coupling with the trailing edge, the trailing edge is simultaneously rotated.

**16.** The rotor blade according to any of claims 1 to 15, **characterized in that** the coupling is arranged such that the trailing edge is rotated due to a pressure change, and due to the coupling with the leading edge, the leading edge is simultaneously rotated.

**17.** The rotor blade according to any of claims 1 to 16, **characterized in that** the elements for the coupling, damping and/or the at least one end stop are located in the axial region of the bearing of the deflectable edges and/or flaps.

**18.** The rotor blade according to any of claims 1 to 16, **characterized in that** the elements for the coupling and/or damping and/or the at least one end stop are located outside of the axial region of the bearing of the deflectable edges and/or flaps.

**19.** The rotor blade according to any of claims 1 to 18, **characterized in that** the length of the crank mechanism and/or the length of the control horn at the leading edge and/or the length of the control horn at the trailing edge is/are may be modified.

## Revendications

**1.** Pale de rotor, comportant un profil aérodynamique avec un bord d'attaque et un bord de fuite, le profil étant réalisé pour former une portance par différence de pression entre un côté d'aspiration et un côté de pression du profil lorsque l'air afflue sur la pale de rotor, la pale de rotor comportant des moyens pour modifier la courbure, ces moyens étant agencés d'une part sur le bord d'attaque et d'autre part sur le bord de fuite et étant réalisés couplés l'un à l'autre de manière passive, c'est-à-dire sans apport d'énergie extérieure hormis l'air affluant, **caractérisée en ce qu'**il est prévu sur le bord d'attaque un ressort pour le réglage de la plage de travail du système.

**2.** Pale de rotor selon la revendication 1, **caractérisée en ce que** les moyens consistent en un élément réalisé avec une certaine élasticité et/ou monté rotatif sur le bord d'attaque et un élément réalisé avec une certaine élasticité et/ou monté rotatif sur le bord de fuite.

**3.** Pale de rotor selon l'une des revendications 1 à 2, **caractérisée en ce que** la pale de rotor est réalisée avec une rigidité variable et/ou le couplage est réalisé avec une intensité variable et/ou le couplage dispose d'un amortissement variable.

**4.** Éolienne avec au moins une pale de rotor selon l'une des revendications 1 à 3.

**5.** Éolienne selon la revendication 4, **caractérisée en ce qu'**elle comporte une régulation ou commande qui, en fonction des rapports de flux d'air mesurés, modifie la valeur ou l'orientation de la rigidité de la pale de rotor et/ou l'intensité du couplage à nouveau passif après la modification par régulation ou commande et/ou l'amortissement sur le bord de fuite.

**6.** Éolienne avec au moins une pale de rotor selon l'une des revendications 1 à 5 pour la réduction de la charge de cas de rafale.

**7.** Pale de rotor selon l'une des revendications 1 à 6, **caractérisée en ce que** le bord d'attaque et le bord de fuite sont réalisés couplés l'un à l'autre par une transmission à bielle.

**8.** Pale de rotor selon l'une des revendications 1 à 7, **caractérisée en ce que** le bord d'attaque et le bord de fuite sont réalisés couplés l'un à l'autre par une bielle.

**9.** Pale de rotor selon l'une des revendications 1 à 8, **caractérisée en ce qu'**un ressort précontraint est prévu sur le bord d'attaque.

10. Pale de rotor selon l'une des revendications 1 à 9, **caractérisée en ce que** des butées mécaniques sont prévues sur le bord d'attaque et sur le bord de fuite pour limiter le mouvement de rotation.

11. Pale de rotor selon l'une des revendications 1 à 10, **caractérisée en ce qu'**un amortisseur est prévu sur le bord de fuite.

12. Pale de rotor selon l'une des revendications 1 à 11, **caractérisée en ce qu'**un amortisseur sous la forme d'un élément faisant ressort avec une courbe caractéristique de ressort non linéaire est prévu sur le bord de fuite.

13. Pale de rotor selon l'une des revendications 1 à 12, **caractérisée en ce que** le bord d'attaque et le bord de fuite sont réalisés couplés l'un à l'autre par une bielle, un guignol de gouverne étant réalisé dirigé vers le haut et l'autre guignol de gouverne étant réalisé dirigé vers le bas.

14. Pale de rotor selon l'une des revendications 1 à 13, **caractérisée en ce que** le bord d'attaque et le bord de fuite sont réalisés couplés l'un à l'autre par une bielle, un bord tournant dans le sens des aiguilles d'une montre et l'autre bord tournant simultanément dans le sens contraire.

15. Pale de rotor selon l'une des revendications 1 à 14, **caractérisée en ce que** le couplage est réalisé de telle sorte que, par la variation de pression sur le bord d'attaque, celui-ci est tourné et, par le couplage avec le bord de fuite, celui-ci est simultanément tourné.

16. Pale de rotor selon l'une des revendications 1 à 15, **caractérisée en ce que** le couplage est réalisé de telle sorte que, par la variation de pression sur le bord de fuite, celui-ci est tourné et, par le couplage avec le bord d'attaque, celui-ci est simultanément tourné.

17. Pale de rotor selon l'une des revendications 1 à 16, **caractérisée en ce que** les éléments pour le couplage, l'amortissement et/ou l'au moins une butée se trouvent sur la zone d'axe pour le support des bords et/ou volets pouvant être déviés.

18. Pale de rotor selon l'une des revendications 1 à 16, **caractérisée en ce que** les éléments pour le couplage et/ou l'amortissement et/ou l'au moins une butée se trouvent en dehors des zones d'axe pour le support des bords et/ou volets pouvant être déviés.

19. Pale de rotor selon l'une des revendications 1 à 18, **caractérisée en ce que** la longueur de la transmission à bielle et/ou la longueur du guignol de gouverne sur le bord d'attaque et/ou la longueur du guignol de gouverne sur le bord de fuite sont modifiables.

Fig. 1 Ausführungsbeispiel mit Kurbestange und Gelenken, mit jeweils einer Klappe fest verbundenen Ruderhörner der Länge L1 und L2

Fig 2: Experimenteller Aufbau

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2622686 A